(19) Europäisches Patentamt
European Patent Office
Office européen des brevets

(11) EP 4 130 103 A1

(12) EUROPEAN PATENT APPLICATION
published in accordance with Art. 153(4) EPC

(43) Date of publication:
**08.02.2023 Bulletin 2023/06**

(21) Application number: **21781196.7**

(22) Date of filing: **29.03.2021**

(51) International Patent Classification (IPC):
***C08J 3/21*** (1990.01) ***C08L 67/00*** (1974.07)
***C08L 81/02*** (1974.07) ***C08J 5/00*** (1974.07)

(52) Cooperative Patent Classification (CPC):
**C08J 3/21; C08J 5/00; C08L 67/00; C08L 81/02**

(86) International application number:
**PCT/JP2021/013370**

(87) International publication number:
**WO 2021/200852 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2020 JP 2020060489**

(71) Applicant: **Teijin Limited**
**Osaka 530-0005 (JP)**

(72) Inventors:
- **NOMURA, Akihisa**
  **Osaka-shi, Osaka 530-0005 (JP)**
- **SOEDA, Junshi**
  **Osaka-shi, Osaka 530-0005 (JP)**
- **CHOKAI, Masayuki**
  **Osaka-shi, Osaka 530-0005 (JP)**
- **YAMANAKA, Katsuhiro**
  **Osaka-shi, Osaka 530-0005 (JP)**

(74) Representative: **Carpmaels & Ransford LLP**
**One Southampton Row**
**London WC1B 5HA (GB)**

# (54) POLYMER HAVING EXCELLENT COMPATIBILITY WITH THERMOPLASTIC RESIN

(57) The purpose of the present invention is to provide a polymer having excellent compatibility with thermoplastic resins. The present invention is a polymer (B), which essentially contains units represented by the following formulas (1), (2) and (3), wherein the number of moles of the unit (1) is 0 to 95, the number of moles of the unit (2) is 0 to 50, and the number of moles of unit (3) is 2 to 80 when the total number of moles of the units (1), (2) and (3) is 100.

[CF 1]

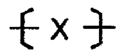

(1)

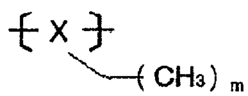

(2)

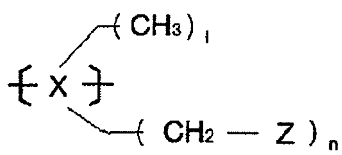

(3)

in the units (1) to (3), "X" is a recurring unit having a benzene ring, in the unit (2), $-CH_3$ is a methyl group substituted for the hydrogen atom of the benzene ring of "X", "m" is an integer of 1 to 6 indicative of the number of the methyl group, the unit (3) is a unit obtained by substituting the hydrogen atom of $-CH_3$ in the unit (2) by a substituent

EP 4 130 103 A1

"Z" derived from a carboxylic acid or anhydride thereof, "n" is an integer of 1 to 6 indicative of the number of substitutions, l+n=m, and the unit (3) is a unit in which "n" is 1, 2, 3, 4, 5, 6 or a combination thereof.

## Description

TECHNICAL FIELD

The present invention relates to a polymer having excellent compatibility with thermoplastic resins and a resin composition comprising the same.

BACKGROUND ART

Thermoplastic resins are used in a wide variety of fields such as mechanical components, electric and electronic parts and auto parts, making use of characteristic properties such as their excellent injection moldability and mechanical properties.

In recent years, research on technology for forming polymer alloys by mixing together a plurality of thermoplastic resins has been actively carried out as means of improving the physical properties of polymers. The purpose of the polymer alloys is to obtain a resin having the characteristic properties of a plurality of thermoplastic resins by mixing together the thermoplastic resins. Since each polymer alloy is composed of existing polymers, the properties of a new polymer obtained by blending the polymers can be predicted and the development risk is small as compared with the development of a new polymer. Therefore, due to these advantages, the development of polymer alloys for use in auto parts and electric and electronic material parts is attracting much attention.

However, when polymers to be mixed together are not compatible with each other, that is, they are under incompatible relation, simple mixing may have a limit to dispersion, and a modification effect may not be obtained. In this case, it is known that a compatibilizing agent is used to improve the dispersion of these polymer phases. There is proposed a layered titanate nanosheet obtained by inserting an organic basic compound between layers of layered titanate as a compatibilizing agent (Patent Document 1).

There is also proposed a resin composition obtained by blending a polylactic acid resin with a polyamide resin, polystyrene resin and polyphenylene sulfide resin by using a compatibilizing agent (Patent Document 2).

PRIOR ART DOCUMENTS

Patent Documents

Patent Document 1: JP-A 2008-45087
Patent Document 2: JP-A 2007-246845

DISCLOSURE OF THE INVENTION

PROBLEM TO BE SOLVED BY THE INVENTION

It is therefore an object of the present invention to provide a polymer having excellent compatibility with thermoplastic resins such as polyester and polyamide. It is another object of the present invention to provide a resin composition having excellent dispersibility and comprising a thermoplastic resin and the above polymer. It is still another object of the present invention to provide a molding (film) composed of the above resin composition and having excellent processability.

It is a further object of the present invention to provide a molding which is composed of a resin composition comprising a liquid crystalline polyester resin (LCP resin) and a polymer derived from polyphenylene sulfide (PPS) having a substituent derived from a carboxylic acid or anhydride thereof in a benzene ring, has excellent dispersibility and a low relative dielectric constant and a low dielectric loss tangent and is suitable for use as a substrate material for high-frequency circuits.

The inventors of the present invention found that a polymer having a substituent derived from a carboxylic acid or anhydride thereof in a benzene ring has excellent compatibility with thermoplastic resins such as polyester and polyamide and accomplished the present invention.

The inventors of the present invention found that a resin composition comprising a thermoplastic resin (component A) and the above polymer (component B) has excellent dispersibility with a small particle diameter Dr of an island phase and accomplished the present invention. Further, the inventors of the present invention found that a film composed of the above resin composition has high processability and is hardly broken.

The inventors of the present invention found that a molding composed of a resin composition comprising a

liquid crystalline polyester resin (LCP resin) and a polymer (I) derived from polyphenylene sulfide (PPS) having a substituent derived from a carboxylic acid or anhydride thereof in a benzene ring has excellent dispersibility and a low relative dielectric constant and a low dielectric loss tangent and is suitable for use as a substrate material for high-frequency circuits. The present invention was accomplished based on this finding.

MEANS FOR SOLVING THE PROBLEM

The present invention includes the following inventions.

1. A polymer (B) essentially comprising units represented by the following formulas (1), (2) and (3), wherein the number of moles of the unit (1) is 0 to 95, the number of moles of the unit (2) is 0 to 50, and the number of moles of unit (3) is 2 to 80 when the total number of moles of the units (1), (2) and (3) is 100:

[CF 1]

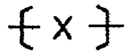

(1)

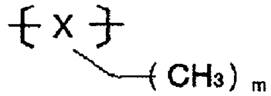

(2)

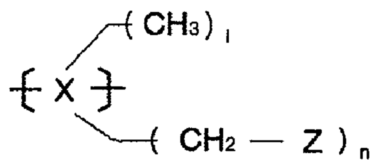

(3)

in the units (1) to (3), "X" is a recurring unit having a benzene ring, in the unit (2), $-CH_3$ is a methyl group substituted for the hydrogen atom of the benzene ring of "X", "m" is an integer of 1 to 6 indicative of the number of the methyl group, the unit (3) is a unit obtained by substituting the hydrogen atom of $-CH_3$ in the unit (2) by a substituent "Z" derived from a carboxylic acid or anhydride thereof, "n" is an integer of 1 to 6 indicative of the number of substitutions, l+n=m, and the unit (3) is a unit in which "n" is 1, 2, 3, 4, 5 or 6, or a unit of the combination thereof.

2. The polymer (B) in the above paragraph 1, wherein, in the units (1) to (3), "X" is represented by following formulas;

[CF 2]

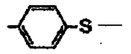

,

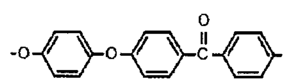

,

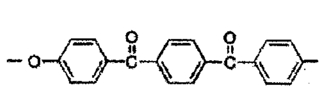

,

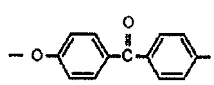

or

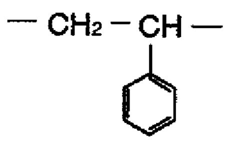

3. The polymer (B) in the above paragraph 1, wherein "Z" in the formula (3) is a substituent derived from at least one compound selected from citric acid, maleic acid, itaconic acid and anhydrides thereof.
4. The polymer (B) in the above paragraph 1, wherein the number of moles of the unit (1) is 10 to 95, the number of moles of the unit (2) is 0 to 35, and the number of moles of the unit (3) is 5 to 55.
5. The polymer (B) in the above paragraph 1, wherein the formula (1) is a formula (S1), the formula (2) is a formula (S2), the formula (3) is a formula (S3) or (S4), the number of moles of the unit (S1) is 20 to 90, the number of moles of the unit (S2) is 0 to 30, and the number of moles of the unit (S3) or the unit (S4) is 10 to 50 based on 100 moles of the total of unit (S1)+unit (S2)+(unit (S3) or unit (S4)).

[CF 3]

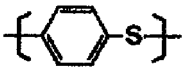

(S 1)

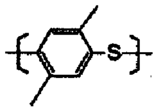

(S 2)

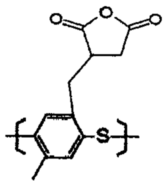

(S 3)

or

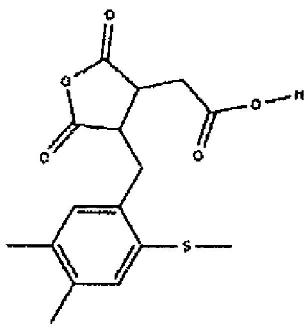

(S 4)

6. A resin composition comprising 100 parts by mass of a thermoplastic resin (component A) and 3 to 900 parts by mass of the polymer (B) (component B) of the above paragraph 1.
7. The resin composition in the above paragraph 6, wherein the thermoplastic resin (component A) is at least one resin selected from the group consisting of polyester resin, liquid crystalline polyester resin and polyamide resin.
8. The resin composition in the above paragraph 6 further comprising 100 to 500 parts by mass of another thermoplastic resin (component C) based on 100 parts by mass of the thermoplastic resin (component A).
9. The resin composition in the above paragraph 8, wherein the other thermoplastic resin (component C) is at least one resin selected from the group consisting of polyphenylene sulfide (PPS), polyether ether ketone (PEEK), polyether ketone ketone (PEKK), polyether ketone (PEK) and polystyrene (PS).
10. The resin composition in the above paragraph 6, wherein the thermoplastic resin (component A) is a liquid crystalline polyester resin, the polymer (component B) is a polymer (I) in which "X" in the units (1) to (3) is represented by the following formula, the component A forms an island phase, the component B forms a sea phase, and the

particle diameter Dr of the island phase of a pellet obtained by melt kneading the resin composition is 5 μm to 50 μm.

[CF 4]

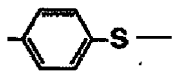

11. A molding composed of the resin composition in any one of the above paragraphs 6 to 10.

12. The molding in the above paragraph 11 which is composed of a resin composition comprising 100 parts by mass of a liquid crystalline polyester resin (component A) and 75 to 900 parts by mass of the polymer (component B), wherein the polymer (the polymer (B)) is a polymer (I) in which "X" in the units (1) to (3) is represented by the following formula, the component A forms an island phase and the component B forms a sea phase, and the molding has (i) a relative dielectric constant of 2.0 to 4.0, (ii) a dielectric loss tangent of $1.0 \times 10^{-4}$ to $1.0 \times 10^{-2}$ and (iii) a particle diameter Dr of the island phase of 0.5 μm to 80 μm.

[CF 5]

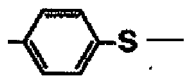

13. The molding in the above paragraph 12, wherein the liquid crystalline polyester (component A) contains units represented by the following formulas (a1) and (a2) in the main chain, and the molar ratio (a1)/(a2) is (5 to 8)/(5 to 2).

[CF 6]

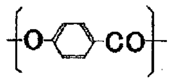

(a 1)

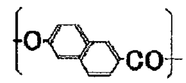

(a 2)

14. A method of producing the polymer (B) in the above paragraph 1, comprising the steps of:

(α) preparing a polymer (b) essentially containing units represented by the following formulas (1) and (2):

[CF 7]

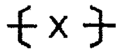

(1)

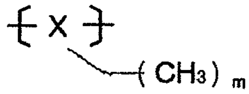

(2)

in the units (1) to (2), "X" is a recurring unit having a benzene ring, in the unit (2), $-CH_3$ is a methyl group substituted for the hydrogen atom of the benzene ring of "X", and "m" is an integer of 1 to 6 indicative of the number of substitutions;

the number of moles of the unit (1) being 0 to 98 and the number of moles of the unit (2) being 2 to 100 when the total number of moles of the units (1) and (2) is 100; and
(β) melt kneading the polymer (b) with at least one compound selected from the group consisting of citric acid, maleic acid, itaconic acid and anhydrides thereof.

15. The production method in the above paragraph 14, wherein 0.05 to 20 parts by mass of at least one compound selected from the group consisting of citric acid, maleic acid, itaconic acid and anhydrides thereof is melt kneaded with 100 parts by mass of the polymer (b) in the step (β).

EFFECT OF THE INVENTION

Since the polymer (B) of the present invention has a substituent derived from a carboxylic acid or anhydride thereof in the benzene ring, it has excellent compatibility with thermoplastic resins such as polyester and polyamide. The resin composition of the present invention has excellent dispersibility, can be formed into a film and is useful as a molding.
It is assumed that the substituent derived from a carboxylic acid or anhydride thereof in the side chain of the polymer (B) of the present invention reacts with the terminal of the thermoplastic resin to form a block polymer of the thermoplastic resin, thereby forming a kind of compatibilizing agent.
When the resin composition of the present invention is molded, the ratio of the particle diameter Dr of the island component in the molding to the particle diameter Dr of the island component in the resin composition is small, thereby obtaining excellent dispersion stability. The molding of the present invention has excellent dispersibility and processability as the particle diameter Dr of the island component falls within a predetermined range. According to a method of producing the molding of the present invention, a molding having excellent dispersibility can be produced.

BEST MODE FOR CARRYING OUT THE INVENTION

[polymer (B)]

When the total number of moles of the units represented by the formulas (1), (2) and (3) of the polymer (B) of the present invention is 100, the number of moles of the unit represented by the formula (1) is 0 to 95, the number of moles of the unit represented by the formula (2) is 0 to 50, and the number of moles of the unit represented by the formula (3) is 2 to 80. The total number of moles of the units represented by the formulas (1), (2) and (3) is set to 100.
The polymer (B) of the present invention has the following three modes.

Mode 1: formulas (1), (2) and (3) are existent.

The number of moles of the unit represented by the formula (1) is 10 to 95, the number of moles of the unit represented by the formula (2) is 1 to 35, and the number of moles of the unit represented by the formula (3) is 5 to 55. Preferably, the number of moles of the unit represented by the formula (1) is 20 to 90, the number of moles of the unit represented by the formula (2) is 1 to 30, and the number of moles of the unit represented by the formula (3) is 10 to 50.

Mode 2: formulas (1) and (3) are existent

The number of moles of the unit represented by the formula (1) is 10 to 95, and the number of moles of the unit represented by the formula (3) is 5 to 90. Preferably, the number of moles of the unit represented by the formula (1) is 20 to 90, and the number of moles of the unit represented by the formula (3) is 10 to 80.

Mode 3: formulas (2) and (3) are existent

The number of moles of the unit represented by the formula (2) is 10 to 98, and the number of moles of the unit represented by the formula (3) is 2 to 90. Preferably, the number of moles of the unit represented by the formula (2) is 20 to 80, and the number of moles of the unit represented by the formula (3) is 20 to 80.
The total number of moles of the unit represented by the formula (1), the unit represented by the formula (2) and the unit represented by the formula (3) in the polymer (B) is 100.
The polymer (B) of the present invention has a recurring unit "X" having a benzene ring. The polymer (B) of the present invention includes a polymer (I) in which "X" is derived from polyphenylene sulfide (PPS), a polymer (II) in which "X" is derived from polyether ether ketone (PEEK), a polymer (III) in which "X" is derived from polyether ketone ketone (PEKK), a polymer (IV) in which "X" is derived from polyether ketone (PEK) and a polymer (V) in which "X" is

derived from polystyrene (PS).

The total polymerization degree (k) of the units of the formulas (1), (2) and (3) of the polymer (B) of the present invention is preferably 50 to 2,000, more preferably 100 to 1,800, much more preferably 200 to 1,500.

<polymer (I)>

The polymer (I) is a polymer whose main chain is derived from polyphenylene sulfide (PPS). The polymer (I) essentially contains units represented by the following formulas (I-1), (I-2) and (I-3).

[CF 8]

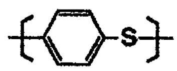

(I-1)

The formula (I-1) represents the recurring unit of polyphenylene sulfide (PPS).

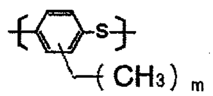

(I-2)

In the unit represented by the formula (I-2), $-CH_3$ is a methyl group substituted for the hydrogen atom of a benzene ring, and "m" is an integer of 1 to 6 indicative of the number of substitutions.

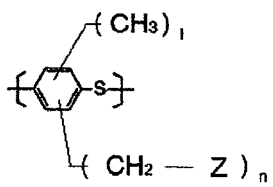

(I-3)

The unit represented by the formula (I-3) is a unit obtained by substituting the hydrogen atom of $-CH_3$ of the unit represented by the formula (I-2) by a substituent "Z". "Z" is a substituent derived from a carboxylic acid or anhydride thereof. "Z" is a group derived from at least one compound selected from citric acid, maleic acid, itaconic acid and anhydrides thereof.

Preferably, "Z" has a structure represented by the following formula.

[CF 9]

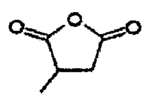

or

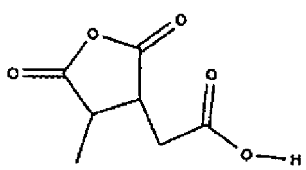

"n" is an integer of 1 to 6 indicative of the number of substitutions, and l+n=m. The unit represented by the formula (I-3) is a unit in which "n" is 1, 2, 3, 4, 5 or 6, or a unit of the combination thereof.

When the total number of moles of the unit (I-1), the unit (I-2) and the unit (I-3) is 100, the number of moles of the unit (I-1) is preferably 0 to 95, more preferably 10 to 95, much more preferably 20 to 90, particularly preferably 25 to 85, the number of moles of the unit (I-2) is preferably 0 to 50, more preferably 0 to 35, much more preferably 0 to 30, particularly preferably 0 to 25, and the number of moles of the unit (I-3) is 2 to 80, preferably 5 to 55, more preferably 10 to 50, particularly preferably 15 to 45.

The polymer (I) essentially contains the units represented by the formulas (I-1), (I-2) and (I-3). The word "essentially" means 70 to 100 mol%, preferably 80 to 100 mol%, more preferably 90 to 100 mol% when the total number of moles of all the units of the polymer (I) is 100 mol%.

The polymer (I) may contain recurring units having the following structures in a total amount of less than 30 mol% of the total of the recurring units.

[CF 10]

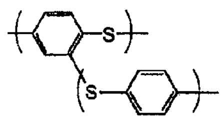
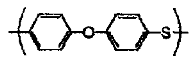
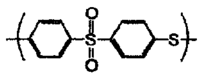
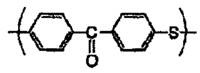
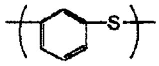
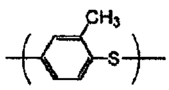
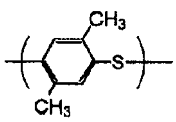

The number average molecular weight of the polymer (I) is preferably 5,000 to 50,000, more preferably 8,000 to 40,000, much more preferably 10,000 to 30,000. The polydispersity of the polymer (I) which is defined as the ratio of weight average molecular weight to number average molecular weight is preferably 2.0 to 4.5, more preferably 2.0 to 4.0, much more preferably 2.0 to 3.5.

The melt viscosity measured at 300°C with a rotary disk type viscometer of the polymer (I) is preferably 100 to 50,000 poise, more preferably 100 to 20,000 poise, much more preferably 300 to 10,000 poise.

An example of the polymer (I) is a polymer having recurring units represented by the following formulas (S1), (S2) and (S3).

[CF 11]

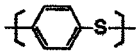

(S 1)

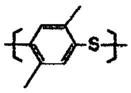

(S 2)

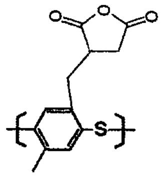

(S 3)

When the total number of moles of the unit (S1), the unit (S2) and the unit (S3) is 100, the number of moles of the unit (S1) is preferably 0 to 95, more preferably 10 to 95, much more preferably 20 to 90, particularly preferably 25 to 85, the number of moles of the unit (S2) is preferably 0 to 50, more preferably 0 to 35, much more preferably 0 to 30, particularly preferably 0 to 25, and the number of moles of the unit (S3) is 2 to 80, preferably 5 to 55, more preferably 10 to 50, particularly preferably 15 to 45.

Another example of the polymer (I) is a polymer having recurring units represented by the following formulas (S1), (S2) and (S4).

[CF 12]

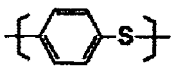

(S 1)

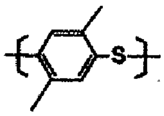

(S 2)

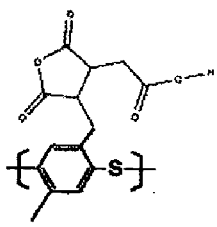

(S 4)

When the total number of moles of the unit (S1), the unit (S2) and the unit (S4) is 100, the number of moles of the unit (S1) is preferably 0 to 95, more preferably 10 to 95, much more preferably 20 to 90, particularly preferably 25 to 85, the number of moles of the unit (S2) is preferably 0 to 50, more preferably 0 to 35, much more preferably 0 to 30, particularly preferably 0 to 25, and the number of moles of the unit (S4) is preferably 2 to 80, more preferably 5 to 55, much more preferably 10 to 50, particularly preferably 15 to 45.

The amount of the atomic group represented by -CO-O-CO- is preferably 0.1 to 2, more preferably 0.2 to 1.5, much more preferably 0.3 to 1.0 based on 1 mole of the recurring unit represented by the formula (S1) of the polymer (I).

<production of polymer (I)>

The polymer (I) is obtained by producing a polymer (i) having a methyl group and essentially containing units represented by the following formulas (I-1) and (I-2) and then melt kneading the polymer (i) with at least one compound

selected from citric acid, maleic acid, itaconic acid and anhydrides thereof to introduce a substituent derived from a carboxylic acid or anhydride thereof.

[CF 13]

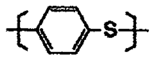

(I−1)

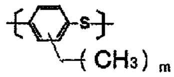

(I−2)

When the total number of moles of the unit (I-1) and the unit (I-2) is 100, the number of moles of the unit (I-1) is preferably 0 to 95, more preferably 0 to 80, much more preferably 0 to 60, and the number of moles of the unit (I-2) is preferably 1 to 100, more preferably 5 to 100.

The polymer (i) can be produced by introducing the unit represented by the formula (I-2) by using an aromatic compound having a methyl group in the side chain as a copolymer component when a copolymer (may be referred to as "PPS" hereinafter) having the unit represented by the formula (I-1) is produced by the following method 1 or 2.

(method 1: reaction between alkali metal sulfide and dihalogen aromatic compound)

PPS can be produced by reacting a material providing a hydrosulfide ion such as an alkali metal sulfide with a dihalogen aromatic compound in an organic amide solvent.

Examples of the alkali metal sulfide include lithium sulfide, sodium sulfide, potassium sulfide, rubidium sulfide, cesium sulfide and mixtures thereof.

Examples of the dihalogen aromatic compound include o-dihalobenzene, m-dihalobenzene, p-dihalobenzene, dihalotoluene, dihalonaphthalene, methoxy-dihalobenzene, dihalobiphenyl, dihalobenzoic acid, dihalodiphenyl ether, dihalodiphenyl sulfone, dihalodiphenyl sulfoxide and halodiphenyl ketone.

The dihalogen aromatic compounds may be used alone or in arbitrary combination. Typical examples of the dihalogen aromatic compound include p-dichlorobenzene; m-dichlorobenzene; o-dichlorobenzene; 2,5-dichlorotoluene; 1,4-dibromobenzene; 1,4-dichloronaphthalene; 1-methoxy-2,5-dichlorobenzene; 4,4'-dichlorobiphenyl; 3,5-dichlorobenzoic acid; 4,4'-dichlorodiphenyl ether; 4,4'-dichlorodiphenyl sulfone; 4,4'-dichlorodiphenyl sulfoxide; and 4,4'-dichlorodiphenyl ketone.

A monohalo compound (such as a monohalogen aromatic compound) may be used in combination with a dihalo aromatic compound to form the terminal group of PPS or adjust a polymerization reaction and the molecular weight of PPS.

(method 2: method of polymerizing a sulfur-containing reaction product with a diiodo aromatic compound)

PPS can be produced by a method in which a sulfur-containing reaction product is polymerized with a diiodo aromatic compound.

The diiodo aromatic compound may be at least one selected from the group consisting of diiodobenzene (DIB), diiodonaphthalene, diiodobiphenyl, diiodobisphenol and diiodobenzophenone. The diiodo aromatic compound may contain a substituent such as an alkyl group or sulfone group. A diiodo aromatic compound containing an oxygen or nitrogen atom in the aromatic group may be used.

The form of elemental sulfur to be reacted with the diiodo aromatic compound is not particularly limited. The elemental sulfur is generally existent in the form of cyclo-octasulfur (S8) having eight atoms bonded together at room temperature. Commercially available solid or liquid sulfur which is not in the above form may be used without restriction.

The reaction product may further contain a polymerization initiator, stabilizer or mixture thereof. The polymerization initiator may be at least one selected from the group consisting of 1,3-diiodo-4-nitrobenzene, mercaptobenzothiazole, 2,2'-dithiobenzothiazole, cyclohexyl-benzothiazole sulfenamide and butyl-benzothiazole sulfonamide but not limited to these. Any stabilizer which is commonly used for the polymerization reaction of a resin may be used without restriction.

The polymerization reaction may be carried out under any condition in which the polymerization reaction of the diiodo aromatic compound and the sulfur-containing reaction product can be initiated. For instance, the polymerization reaction can be carried out under reaction conditions that the temperature is raised and the pressure is reduced. Stated more specifically, the polymerization reaction may be carried out for 1 to 30 hours from the initial reaction conditions of

180°C to 250°C and 50 to 450 Torr to the final reaction conditions of 270 to 350°C and 0.001 to 20 Torr. Much more specifically, the polymerization reaction may be carried out under the final reaction conditions of 280°C to 300°C and 0.1 to 0.5 Torr.

Meanwhile, a polymerization terminator may be further added to the reaction product during the polymerization reaction at a timing when polymerization proceeds to a certain degree. The polymerization terminator is not particularly limited as long as it can remove an iodine group contained in the polymerized polymer to stop polymerization. The polymerization terminator may be at least one selected from the group consisting of diphenyl sulfide, diphenyl ether, diphenyl, benzophenone, dibenzothiazole disulfide, monoiodoaryl compounds, benzothiazole, benzothiazole sulfonamide, thiuram, dithiocarbamate and diphenyl disulfide.

PPS which is prepared as described above may contain iodine and free iodine bonded to the main chain. Stated more specifically, the total content of the iodine and the free iodine bonded to the main chain may be 10 to 10,000 ppm. The total content of the iodine and the free iodine bonded to the main chain can be measured by carrying out the heat treatment of a PPS sample at a high temperature and then quantity determination using ion chromatography as will be described in Examples below. The free iodine is produced in the step of polymerizing the above diiodo aromatic compound and the above sulfur-containing reaction product and collectively includes a iodine molecule, iodine ion and iodine radical all of which remain while they are chemically separated from the finally formed PPS.

Thereafter, the polymer (I) can be produced by melt kneading the polymer (i) with at least one compound selected from citric acid, maleic acid, itaconic acid and anhydrides thereof to introduce a carboxylic anhydride into the side chain so as to form the recurring unit represented by the formula (I-3).

<polymer (II)>

The polymer (II) is a polymer whose main chain is derived from polyether ether ketone (PEEK). The polymer (II) essentially contains units represented by the following formulas (II-1), (II-2) and (II-3).

[CF 14]

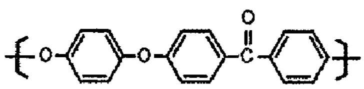

(II-1)

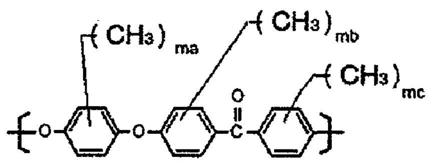

(II-2)

In the unit represented by the formula (II-2), $-CH_3$ is a methyl group substituted for the hydrogen atom of a benzene ring, and "ma", "mb" and "mc" each indicate the number of substitutions and are each an integer which satisfies ma+mb+mc=1 to 6.

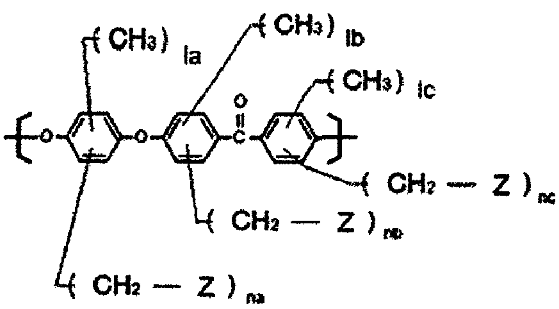

(II-3)

The unit represented by the formula (II-3) is a unit obtained by substituting the hydrogen atom of $-CH_3$ of the unit represented by the formula (II-2) by a substituent "Z".

"Z" is a substituent derived from a carboxylic acid or anhydride thereof. "Z" is a group derived from at least one compound selected from citric acid, maleic acid, itaconic acid and anhydrides thereof. Preferably, "Z" has a structure

represented by the following formula.

[CF 15]

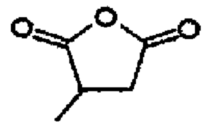

or

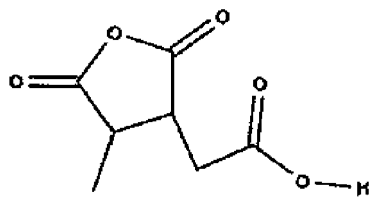

"na", "nb" and "nc" each indicate the number of substitutions and are each an integer which satisfies na+nb+nc+la+lb+lc=1 to 6. The unit represented by the formula (3) is a unit in which "na", "nb", "nc", "la", "lb" and "lc" are each 0, 1, 2, 3, 4, 5 or 6, or a unit of the combination thereof.

When the total number of moles of the unit (II-1), the unit (II-2) and the unit (II-3) is 100, the number of moles of the unit (II-1) is preferably 0 to 95, more preferably 10 to 95, much more preferably 20 to 90, particularly preferably 25 to 85, the number of moles of the unit (II-2) is preferably 0 to 50, more preferably 0 to 35, much more preferably 0 to 30, particularly preferably 0 to 25, and the number of moles of the unit (II-3) is preferably 2 to 80, more preferably 5 to 55, much more preferably 10 to 50, particularly preferably 15 to 45.

The polymer (II) essentially contains the units represented by the formulas (II-1), (II-2) and (II-3). The word "essentially" herein means 70 to 100 mol%, preferably 80 to 100 mol%, more preferably 90 to 100 mol% when the total number of moles of all the units of the polymer (II) is 100 mol%.

The polymer (II) may be constituted from other recurring units in a total amount of less than 30 mol% of the total of the recurring units.

The reduced viscosity ($\eta_{sp}$/C) of the polymer (II) is not particularly limited but preferably 0.1 to 2.5 dL/g, more preferably 0.2 to 2.0 dL/g, much more preferably 0.3 to 1.8 dL/g. A molding having excellent mechanical characteristics is obtained by adjusting the reduced viscosity to the above preferred range.

The melting point of the polymer (II) is in the range of preferably 200°C to 450°C, more preferably 230°C to 400°C, much more preferably 250°C to 350°C. A molding having excellent moldability and heat resistance is obtained by adjusting the temperature to the above preferred range. The melting point of the polymer (II) can be measured by observing the endothermic peak temperature using a differential scanning calorimeter.

<production of polymer (II)>

The polymer (II) is obtained by producing a polymer (ii) having a methyl group and essentially containing units represented by the following formulas (II-1) and (II-2) and then melt kneading the polymer (ii) with at least one compound selected from citric acid, maleic acid, itaconic acid and anhydrides thereof to introduce a substituent derived from a carboxylic acid or anhydride thereof.

[CF 16]

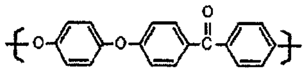

(II-1)

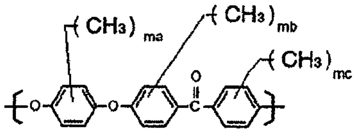

(II-2)

In the unit represented by the formula (II-2), $-CH_3$ is a methyl group substituted for the hydrogen atom of a benzene ring, and "ma", "mb" and "mc" each indicate the number of substitutions and are each an integer which satisfies ma+mb+mc=1 to 6.

When the total number of moles of the unit (II-1) and the unit (II-2) is 100, the number of moles of the unit (II-1) is preferably 0 to 90, more preferably 0 to 80, and the number of moles of the unit (II-2) is preferably 10 to 100, more preferably 20 to 100.

The polymer (ii) having a methyl group can be produced by copolymerizing hydroquinone substituted by a methyl group with 4,4-difluorobenzophenone substituted by a methyl group when hydroquinone and 4,4-difluorobenzophenone are reacted with each other in the presence of a potassium carbonate catalyst.

<polymer (III)>

The polymer (III) is a polymer whose main chain is derived from polyether ketone ketone (PEKK). The polymer (III) essentially contains units represented by the following formulas (III-1), (III-2) and (III-3).

[CF 17]

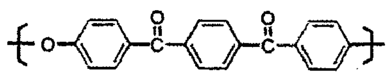

(III-1)

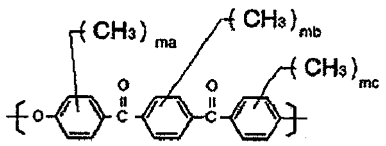

(III-2)

In the unit represented by the formula (III-2), $-CH_3$ is a methyl group substituted for the hydrogen atom of a benzene ring, and "ma", "mb" and "mc" each indicate the number of substitutions and are each an integer which satisfies ma+mb+mc=1 to 6.

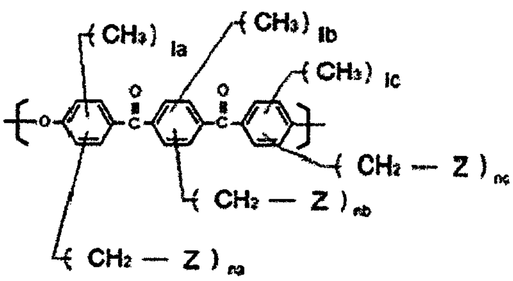

III-3)

The unit represented by the formula (III-3) is a unit obtained by substituting the hydrogen atom of $-CH_3$ of the unit represented by the formula (III-2) by a substituent "Z".

"Z" is a substituent derived from a carboxylic acid or anhydride thereof. "Z" is a group derived from at least one

compound selected from citric acid, maleic acid, itaconic acid and anhydrides thereof. Preferably, "Z" has a structure represented by the following formula.

[CF 18]

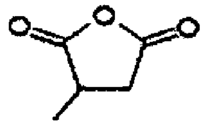

or

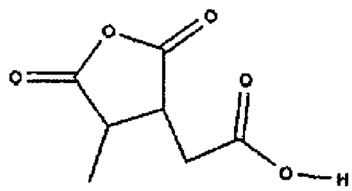

"na", "nb" and "nc" each indicate the number of substitutions and are each an integer which satisfies na+nb+nc+la+lb+lc=1 to 6.

The unit represented by the formula (III-3) is a unit in which "na", "nb", "nc", "la", "lb" and "lc" are each 0, 1, 2, 3, 4, 5 or 6, or a unit of the combination thereof.

When the total number of moles of the unit (III-1), the unit (III-2) and the unit (III-3) is 100, the number of moles of the unit (III-1) is preferably 0 to 95, more preferably 10 to 95, much more preferably 20 to 90, particularly preferably 25 to 85, the number of moles of the unit (III-2) is preferably 0 to 50, more preferably 0 to 35, much more preferably 0 to 30, particularly preferably 0 to 25, and the number of moles of the unit (III-3) is preferably 2 to 80, more preferably 5 to 55, much more preferably 10 to 50, particularly preferably 15 to 45.

The polymer (III) essentially contains the units represented by the formulas (III-1), (III-2) and (III-3). The word "essentially" means preferably 70 to 100 mol%, more preferably 80 to 100 mol%, much more preferably 90 to 100 mol% when the total number of moles of all the units of the polymer (III) is 100 mol%. The polymer (III) may be constituted from other recurring units in a total amount of less than 30 mol% of the total of the recurring units.

The reduced viscosity ($\eta_{sp}$/C) of the polymer (III) is not particularly limited but preferably 0.1 to 2.5 dL/g, more preferably 0.2 to 2.0 dL/g, much more preferably 0.3 to 1.8 dL/g. A molding having excellent mechanical characteristics is obtained by adjusting the reduced viscosity to the above preferred range.

The melting point of the polymer (III) is in the range of preferably 200°C to 450°C, more preferably 230°C to 400°C, much more preferably 250°C to 350°C. A molding having excellent moldability and heat resistance is obtained by adjusting the temperature to the above preferred range. The melting point of the polymer (III) can be measured by observing the endothermic peak temperature using a differential scanning calorimeter.

<production of polymer (III)>

The polymer (III) is obtained by producing a polymer (iii) having a methyl group and essentially containing units represented by the following formulas (III-1) and (III-2) and then melt kneading the polymer (iii) with at least one compound selected from citric acid, maleic acid, itaconic acid and anhydrides thereof to introduce a substituent derived from a carboxylic acid or anhydride thereof.

[CF 19]

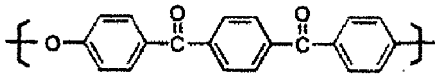

(III-1)

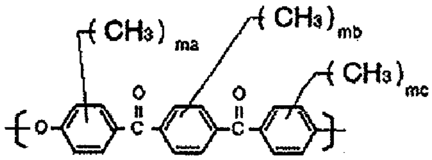

(III-2)

In the unit represented by the formula (III-2), $-CH_3$ is a methyl group substituted for the hydrogen atom of a benzene ring, and "ma", "mb" and "mc" each indicate the number of substitutions and are each an integer which satisfies ma+mb+mc=1 to 6.

When the total number of moles of the unit (III-1) and the unit (III-2) is 100, the number of moles of the unit (III-1) is preferably 0 to 90, more preferably 0 to 80, and the number of moles of the unit (III-2) is preferably 10 to 100, more preferably 20 to 100.

The polymer (iii) having a methyl group can be produced by copolymerizing benzophenone substituted by a methyl group with a benzene compound having a ketone group substituted by a methyl group when benzophenone and a benzene ring having a ketone group bonded to chlorine at both terminals are reacted with each other in the presence of an aluminum chloride catalyst.

<polymer (IV)>

The polymer (IV) is a polymer whose main chain is derived from polyether ketone (PEK). The polymer (IV) essentially contains units represented by the following formulas (IV-1), (IV-2) and (IV-3).

[CF 20]

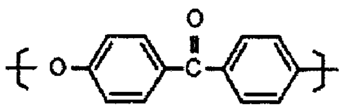

(IV-1)

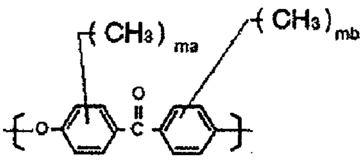

(IV-2)

In the unit represented by the formula (IV-2), $-CH_3$ is a methyl group substituted for the hydrogen atom of a benzene ring, and "ma" and "mb" each indicate the number of substitutions and are each an integer which satisfies ma+mb=1 to 6.

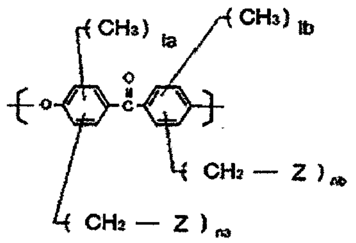

(IV-3)

The unit represented by the formula (IV-3) is a unit obtained by substituting the hydrogen atm of $-CH_3$ of the unit represented by the formula (IV-2) by a substituent "Z".

"Z" is a substituent derived from a carboxylic acid or anhydride thereof. "Z" is a group derived from at least one compound selected from citric acid, maleic acid, itaconic acid and anhydrides thereof. Preferably, "Z" has a structure represented by the following formula.

[CF 21]

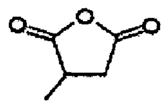

or

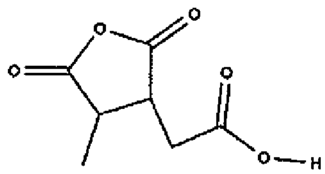

"na" and "nb" each indicate the number of substitutions and are each an integer which satisfies na+nb+la+lb=1 to 6.

The unit represented by the formula (3) is a unit in which "na", "nb", "la" and "lb" are each 0, 1, 2, 3, 4, 5 or 6, or a unit of the combination thereof.

When the total number of moles of the unit (IV-1), the unit (IV-2) and the unit (IV-3) is 100, the number of moles of the unit (IV-1) is preferably 0 to 95, more preferably 10 to 95, much more preferably 20 to 90, particularly preferably 25 to 85, the number of moles of the unit (IV-2) is preferably 0 to 50, more preferably 0 to 35, much more preferably 0 to 30, particularly preferably 0 to 25, and the number of moles of the unit (IV-3) is preferably 2 to 80, more preferably 5 to 55, much more preferably 10 to 50, particularly preferably 15 to 45.

The polymer (IV) essentially contains the units represented by the formula (IV-1), (IV-2) and (IV-3). The word "essentially" means preferably 70 to 100 mol%, more preferably 80 to 100 mol%, much more preferably 90 to 100 mol% when the total number of moles of all the units of the polymer (IV) is 100 mol%.

The polymer (IV) may be constituted from other recurring units in a total amount of less than 30 mol% of the total of the recurring units.

The reduced viscosity ($\eta_{sp}/C$) of the polymer (IV) is not particularly limited but preferably 0.1 to 2.5 dL/g, more preferably 0.2 to 2.0 dL/g, much more preferably 0.3 to 1.8 dL/g. A molding having excellent mechanical characteristics is obtained by adjusting the viscosity to the above preferred range.

The melting point of the polymer (IV) is in the range of preferably 200°C to 450°C, more preferably 230°C to 400°C, much more preferably 250°C to 350°C. A molding having excellent moldability and heat resistance is obtained by adjusting the temperature to the above preferred range. The melting point of the polymer (IV) can be measured by observing the endothermic peak temperature using a differential scanning calorimeter.

<production of polymer (IV)>

The polymer (IV) is obtained by producing a polymer (iv) having a methyl group and essentially containing units represented by the following formulas (IV-1) and (IV-2) and then melt kneading the polymer (iv) with at least one compound

selected from citric acid, maleic acid, itaconic acid and anhydrides thereof to introduce a substituent derived from a carboxylic acid or anhydride thereof.

[CF 22]

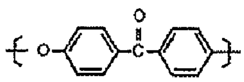

(IV-1)

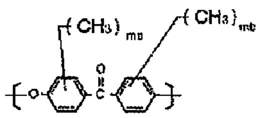

(IV-2)

In the unit represented by the formula (IV-2), $-CH_3$ is a methyl group substituted for the hydrogen atom of a benzene ring, and "ma" and "mb" each indicate the number of substitutions and are each an integer which satisfies ma+mb=1 to 6.

When the total number of moles of the unit (IV-1) and the unit (IV-2) is 100, the number of moles of the unit (IV-1) is preferably 0 to 90, more preferably 0 to 80, and the number of moles of the unit (IV-2) is preferably 10 to 100, more preferably 20 to 100.

The polymer (iv) is produced by bonding benzophenone bonded to fluorine and a hydroxyl group at both terminals to copolymerize benzophenone having a methyl group in a benzene ring.

<polymer (V)>

The polymer (V) is a polymer whose main chain is derived from polystyrene (PS). The polymer (V) essentially contains units represented by the following formulas (V-1), (V-2) and (V-3).

[CF 23]

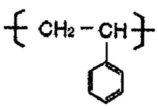

(V-1)

The formula (V-1) is a recurring unit constituting polystyrene.

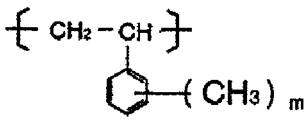

(V-2)

In the unit represented by the formula (V-2), $-CH_3$ is a methyl group substituted for the hydrogen atom of a benzene ring, and "m" is an integer of 1 to 6 indicative of the number of substitutions.

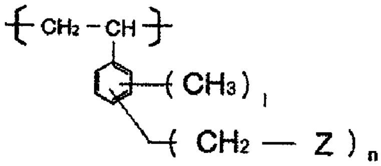

(V-3)

The unit represented by the formula (V-3) is a unit obtained by substituting the hydrogen atom of $-CH_3$ of the

unit represented by the formula (V-2) by a substituent "Z".

"Z" is a substituent derived from a carboxylic acid or anhydride thereof. "Z" is a group derived from at least one compound selected from citric acid, maleic acid, itaconic acid and anhydrides thereof. Preferably, "Z" has a structure represented by the following formula.

[CF 24]

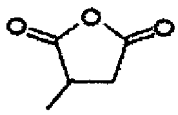

or

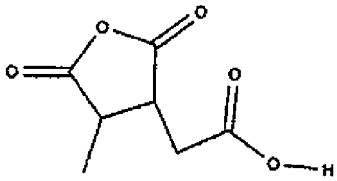

"n" is an integer of 1 to 6 indicative of the number of substitutions, and l+n=m..

The unit represented by the formula (V-3) is a unit in which "n" is 1, 2, 3, 4, 5 or 6, or a unit of the combination thereof.

When the total number of moles of the unit (V-1), the unit (V-2) and the unit (V-3) is 100, the number of moles of the unit (V-1) is preferably 0 to 95, more preferably 10 to 95, much more preferably 20 to 90, particularly preferably 25 to 85, the number of moles of the unit (V-2) is preferably 0 to 50, more preferably 0 to 35, much more preferably 0 to 30, particularly preferably 0 to 25, and the number of moles of the unit (V-3) is preferably 2 to 80, more preferably 5 to 55, much more preferably 10 to 50, particularly preferably 15 to 45.

The polymer (V) essentially contains the units represented by the formulas (V-1), (V-2) and (V-3). The word "essentially" means preferably 70 to 100 mol%, more preferably 80 to 100 mol%, much more preferably 90 to 100 mol% when the total number of moles of all the units of the polymer (V) is 100 mol%. The polymer (V) may be constituted from other recurring units having different structures in a total amount of less than 30 mol% of the total of the recurring units.

The glass transition temperature of the polymer (V) is in the range of preferably 20°C to 150°C, more preferably 50°C to 135°C, much more preferably 60°C to 120°C. A molding having excellent moldability and heat resistance is obtained by adjusting the temperature to the above preferred range. The glass transition temperature of the polymer (V) can be measured by using a differential scanning calorimeter.

The molecular weight of the polymer (V) can be obtained by GPC measurement using GPC and chloroform as an eluate. The molecular weight in terms of weight average molecular weight of the polymer (V) is preferably 10,000 to 400,000, more preferably 20,000 to 350,000, much more preferably 30,000 to 300,000.

In the polymer (V), the formula (V-1) may represent a unit derived from polystyrene, styrene/acrylonitrile polymer or rubber modified styrene-based resin. Examples of the rubber modified styrene-based resin include impact-resistant polystyrene (HIPS), ABS resin (acrylonitrile/butadiene/styrene polymer), AAS resin (acrylonitrile/acryl/styrene polymer) and AES resin (acrylonitrile/ethylenepropylene/styrene polymer). The polymer (V) may have a syndiotactic structure formed by polymerization using a metallocene catalyst.

<production of polymer (V)>

The polymer (V) is obtained by producing a polymer (v) having a methyl group and essentially containing units represented by the following formulas (V-1) and (V-2) and then melt kneading the polymer (v) with at least one compound selected from citric acid, maleic acid, itaconic acid and anhydrides thereof to introduce a substituent derived from a carboxylic acid or anhydride thereof.

[CF 25]

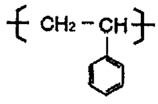

(V-1)

The formula (V-1) is a recurring unit constituting polystyrene.

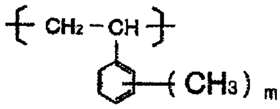

(V-2)

In the unit represented by the formula (V-2), $-CH_3$ is a methyl group substituted for the hydrogen atom of a benzene ring, and "m" is an integer of 1 to 6 indicative of the number of substitutions.

When the total number of moles of the unit (V-1) and the unit (V-2) is 100, the number of moles of the unit (V-1) is preferably 0 to 90, more preferably 0 to 80, and the number of moles of the unit (V-2) is preferably 10 to 100, more preferably 20 to 100.

The polymer (v) can be produced by polymerizing styrene obtained by substituting a benzene ring by a methyl group.

[resin composition]

In the present invention, the polymer (B) may be referred to as "component B". The resin composition of the present invention comprises 3 to 900 parts by mass of the above polymer (component B) based on 100 parts by mass of a thermoplastic resin (component A).

Examples of the thermoplastic resin (component A) include polyester resin, liquid crystalline polyester resin (LCP resin) and polyamide resin.

When a polyester resin or liquid crystalline polyester resin (LCP resin) is used as the thermoplastic resin (component A), the content of the above polymer (component B) is preferably 10 to 800 parts by mass, more preferably 20 to 700 parts by mass based on the 100 parts by mass of the polyester resin or liquid crystalline polyester resin (LCP resin).

When a polyamide resin is used as the thermoplastic resin (component A), the content of the above polymer (component B) is preferably 4 to 800 parts by mass, more preferably 5 to 400 parts by mass based on the 100 parts by mass of the polyamide resin.

The resin composition of the present invention may comprise 5 to 500 parts by mass of another thermoplastic resin (component C) based on 100 parts by mass of the thermoplastic resin (component A). The other thermoplastic resin (component C) is preferably at least one resin selected from the group consisting of polyphenylene sulfide (PPS), polyether ether ketone (PEEK), polyether ketone ketone (PEKK), polyether ketone (PEK) and polystyrene (PS).

<polyester resin>

The polyester resin is a polymer or a polymer comprising as the main structural unit at least one residue selected from the group consisting of (1) a dicarboxylic acid or ester forming derivative thereof and a diol or ester forming derivative thereof, (2) a hydroxycarboxylic acid or ester forming derivative thereof and (3) a lactone. The term "main structural unit" herein means that the polyester resin comprises at least one residue selected from the group consisting of (1) to (3) in an amount of 50 mol% or more based on the total of all the structural units. The amount of the residue is preferably 80 mol% or more. Particularly, a polymer or a polymer comprising the residue of (1) a dicarboxylic acid or ester forming derivative thereof and a diol or ester forming derivative thereof as the main structural unit is preferred as it is excellent in mechanical properties and heat resistance.

Examples of the above dicarboxylic acid or ester forming derivative thereof include aromatic dicarboxylic acids such as terephthalic acid, isophthalic acid, phthalic acid, 2,6-napthalenedicarboxylic acid, 1,5-naphthalenedicarboxylic acid, bis(p-carboxyphenyl)methane, 1,4-anthracenedicarboxylic acid, 1,5-anthracenedicarboxylic acid, 1,8-anthracenedicarboxylic acid, 2,6-anthracenedicarboxylic acid, 9,10-anthracenedicarboxylic acid, 4,4'-diphenyl ether dicarboxylic acid, 5-tetrabutylphosphonium isophthalic acid and 5-sodium sulfoisophthalic acid; aliphatic dicarboxylic acids such as

oxalic acid, succinic acid, adipic acid, sebacic acid, azelaic acid, dodecanedioic acid, malonic acid, glutaric and dimeric acid; alicyclic dicarboxylic acids such as 1,3-cyclohexanedicarboxylic acid and 1,4-cyclohexanedicarboxylic acid, and ester forming derivatives thereof. They may be used in combination of two or more.

Examples of the above diol and ester forming derivative thereof include aliphatic and alicyclic glycols having 2 to 20 carbon atoms such as ethylene glycol, propylene glycol, 1,4-butanediol, neopentyl glycol, 1,5-pentanediol, 1,6-hexanediol, decamethylene glycol, cyclohexane dimethanol, cyclohexanediol and dimer diol, long-chain glycols having a molecular weight of 200 to 100,000 such as polyethylene glycol, poly-1,3-propylene glycol and polytetramethylene glycol, aromatic dioxy compounds such as 4,4'-dihydroxybiphenyl, hydroquinone, t-butyl hydroquinone, bisphenol A, bisphenol S and bisphenol F, and ester forming derivatives thereof. They may be used in combination of two or more.

Examples of the polymer or the polymer comprising a dicarboxylic acid or ester forming derivative thereof and a diol or ester forming derivative thereof as the structural units include aromatic polyester resins such as polyethylene terephthalate, polypropylene terephthalate polybutylene terephthalate, polypropylene isophthalate, polybutylene isophthalate, polybutylene naphthalate, polypropylene isophthalate/terephthalate, polybutylene isophthalate/terephthalate, polypropylene terephthalate/naphthalate, polybutylene terephthalate/naphthalate, polybutylene terephthalate/decanedicarboxylate, polypropylene terephthalate/5-sodium sulfoisophthalate, polybutylene terephthalate/5-sodium sulfoisophthalate, polypropylene terephthalate/polyethylene glycol, polybutylene terephthalate/polyethylene glycol, polypropylene terephthalate/polytetramethylene glycol, polybutylene terephthalate/polytetramethylene glycol, polypropylene terephthalate/isophthalate/polytetramethylene glycol, polybutylene terephthalate/isophthalate/polytetramethylene glycol, polybutylene terephthalate/succinate, polypropylene terephthalate/adipate, polybutylene terephthalate/adipate, polypropylene terephthalate/sebacate, polybutylene terephthalate/sebacate, polypropylene terephthalate/isophthalate/adipate, polybutylene terephthalate/isophthalate/succinate, polybutylene terephthalate/isophthalate/adipate and polybutylene terephthalate/isophthalate/sebacate. These polymers and polymers may be used alone or in combination of two or more. "/" means a polymer.

From the viewpoint of improving mechanical properties and heat resistance, polymers or polymers comprising the residue of an aromatic dicarboxylic acid or ester forming derivative thereof and the residue of an aliphatic diol or ester forming derivative thereof as the main structural unit are preferred, and polymers or polymers comprising the residue of terephthalic acid, naphthalenedicarboxylic acid or ester forming derivative thereof and the residue of an aliphatic diol selected from propylene glycol and 1,4-butaneidol or ester forming derivative thereof as the main structural unit are more preferred.

Out of these, at least one aromatic polyester selected from polyethylene terephthalate, polypropylene terephthalate, polybutylene terephthalate, polypropylene naphthalate, polybutylene naphthalate, polypropylene isophthalate/terephthalate, polybutylene isophthalate/terephthalate, polypropylene terephthalate/naphthalate, polybutylene adipate/terephthalate, polybutylene terephthalate/sebacate and polybutylene terephthalate/naphthalate is particularly preferred.

At least one selected from polyethylene terephthalate, polybutylene terephthalate, polybutylene isophthalate/terephthalate, polybutylene decanedicarboxylate/terephthalate, polybutylene terephthalate/naphthalate and polybutylene/ethylene terephthalate is more preferred. Two or more of them may be used in combination in any total amount.

The polyester used in the present invention has a weight average molecular weight (Mw) of preferably 8,000 or more from the viewpoint of improving its mechanical properties. When the weight average molecular weight (Mw) is 500,000 or less, flowability can be improved advantageously. The weight average molecular weight is more preferably 300,000 or less, much more preferably 250,000 or less.

The polyester used in the present invention can be produced by a known polycondensation method or ring-opening polymerization method. As for the production method, batch polymerization or continuous polymerization may be used, and a transesterification reaction or direct polymerization reaction may be employed. However, from the viewpoint of productivity, continuous polymerization is preferred, and direct polymerization is more preferred.

When the polyester is a polymer or a polymer obtained from a condensation reaction between a dicarboxylic acid or ester forming derivative thereof and a diol or ester forming derivative thereof as essential components, it can be produced by carrying out an esterification reaction or transesterification reaction between the dicarboxylic acid or ester forming derivative thereof and the diol or ester forming derivative thereof and then a polycondensation reaction.

To promote the esterification reaction or transesterification reaction and the polycondensation reaction effectively, a polymerization reaction catalyst is preferably added at the time of these reactions. Examples of the polymerization reaction catalyst include organic titanium compounds such as methyl esters, tetra-n-propyl esters, tetra-n-butyl esters, tetraisopropyl esters, tetraisobutyl esters, tetra-tert-butyl esters, cyclohexyl esters, phenyl esters, benzyl esters, tolyl esters and mixed esters thereof of titanic acid, tin compounds such as dibutyltin oxide, methylphenyltin oxide, tetraethyl tin, hexaethylditin oxide, cyclohexahexylditin oxide, didodecyltin oxide, triethyltin hydroxide, triphenyltin hydroxide, triisobutyltin acetate, dibutyltin diacetate, diphenyltin dilaurate, monobutyltin trichloride, dibutyltin dichloride, tributyltin chloride, dibutyltin sulfide, butylhydroxytin oxide, and alkylstannic acids including methyl stannic acid, ethyl stannic acid and butyl stannic acid, zirconia compounds such as zirconium tetra-n-butoxide, and antimony compounds such as

antimony trioxide and antimony acetate. They may be used in combination of two or more.

Out of these polymerization reaction catalysts, organic titanium compounds and tin compounds are preferred, and tetra-n-butyl esters of titanic acid are more preferred. The amount of the polymerization reaction catalyst is preferably 0.01 to 0.2 part by weight based on 100 parts by weight of the polyester resin.

Examples of the lactone include glycolide, ε-caprolactone, β-propiolactone, δ-butyrolactone, β- or γ-butyrolactone, pivalolactone and δ-valerolactone.

<liquid crystalline polyester resin (LCP resin)>

The liquid crystalline polyester resin (LCP resin) used as the component A in the present invention is, for example, a liquid crystalline polyester having a structural unit selected from aromatic oxycarbonyl unit, aromatic dioxy unit, aromatic and/or aliphatic dicarbonyl unit and alkylenedioxy unit .

The aromatic oxycarbonyl unit is, for example, a structural unit produced from p-hydroxybenzoic acid or 6-hydroxy-2-naphthoeic acid.

The aromatic dioxy unit is, for example, a structural unit produced from 4,4'-dihydroxybiphenyl, hydroquinone, 3,3',5,5,'-tetramethyl-4,4'-dihydroxybiphenyl, t-butyl hydroquinone, phenyl hydroquinone, 2,6-dihydroxynaphthalene, 2,7-dihydroxynaphthalene, 2,2-bis(4-hydroxyphenyl)propane or 4,4'-dihydroxydiphenyl ether.

The aromatic and/or aliphatic dicarbonyl unit is, for example, a structural unit produced from terephthalic acid, isophthalic acid, 2,6-naphthalenedicarboxylic acid, 4,4'-diphenyldicarboxylic acid, 1,2-bis(phenoxy)ethane-4,4'-dicarboxylic acid, 1,2-bis(2-chlorophenoxy)ethane-4,4'-dicarboxylicy acid, 4,4'-diphenylether dicarboxylic acid, adipic acid or sebacic acid.

The alkylenedioxy unit is, for example, a structural unit produced from ethylene glycol, 1,3-propylene glycol or 1,4-butanediol.

The aromatic iminooxy unit is, for example, a structural unit produced from 4-aminophenol.

A liquid crystalline polyester having structural units represented by the following formulas (1), (2), (3) and (4) is preferred.

(structural unit (1))

[CF 26]

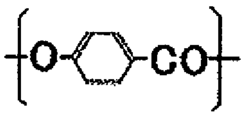

and/or

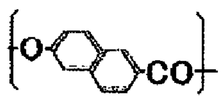

(1)

The structural unit (1) is a structural unit produced from p-hydroxybenzoic acid.

(structural unit (2))

[CF 27]

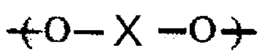

(2)

In the formula (2), "X" is at least one group selected from the following groups.

[0111] [CF 28]

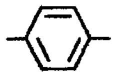
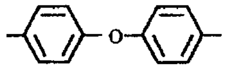
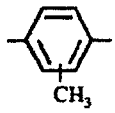
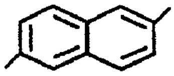
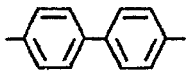
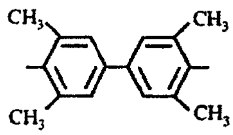
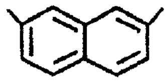
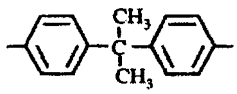
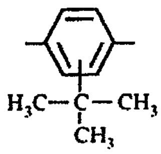
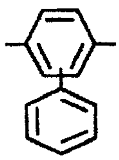

The structural unit (2) is a structural unit produced from at least one aromatic dihydroxy compound selected from 4,4'-dihydroxybiphenyl, 3,3'-,5,5'-tetramethyl-4,4'-dihydroxybiphenyl, hydroquinone, t-butyl hydroquinone, phenyl hydroquinone, methyl hydroquinone, 2,6-dihydroxy naphthalene, 2,7-dihydroxy naphthalene, 2,2-bis(4-hydroxyphenyl)propane and 4,4'-dihydroxydiphenyl ether.

(structural unit (3))

[CF 29]

$$-(O-CH_2CH_2-O)- \quad (3)$$

The structural unit (3) is a structural unit produced from ethylene glycol.

(structural unit (4))

[CF 30]

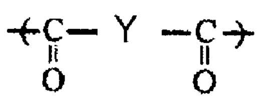

(4)

In the formula (4), "Y" is at least one group selected from the following groups.

[CF 31]

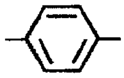
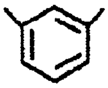
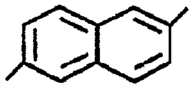
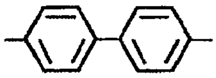
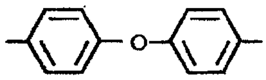
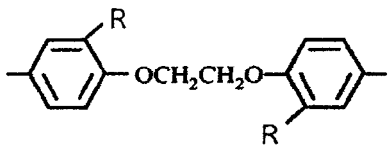

In the above formula, "R" is at least one selected from hydrogen atom, halogen and alkyl group. The alkyl group preferably has 1 to 6 carbon atoms.

The structural unit (4) is a structural unit produced from at least one aromatic dicarboxylic acid selected from terephthalic acid, isophthalic acid, 4,4'-diphenyldicarboxylic acid, 2,6-naphthalenedicarboxylic acid, 1,2-bis(phenoxy)ethane-4,4'-dicarboxylic acid, 1,2-bis(2-chlorophenoxy)ethane-4,4'-dicarboxylic acid and 4,4'-diphenyl ether dicarboxylic acid.

The liquid crystalline polyester (LCP) is at least one selected from a polymer containing the above structural units (1), (3) and (4) and a polymer containing the above structural units (1), (2), (3) and (4) as described above, and the copolymerization ratio of the structural units (1), (2), (3) and (4) is arbitrary. However, the following ratio is preferred to obtain the characteristic properties of the present invention.

That is, in the case of the polymer containing the structural units (1), (2), (3) and (4), the total content of the structural units (1) and (2) is preferably 30 to 95 mol%, more preferably 40 to 85 mol% based on the total of the structural units (1), (2) and (3). The content of the structural unit (3) is preferably 70 to 5 mol%, more preferably 60 to 15 mol% based on the total of the structural units (1), (2) and (3). The molar ratio [(1)/(2)] of the structural unit (1) to the structural unit (2) is preferably 75/25 to 95/5, more preferably 78/22 to 93/7. The number of moles of the structural unit (4) is preferably substantially equal to the total number of moles of the structural units (2) and (3).

Preferably, the LCP resin (component A) contains recurring units represented by the following formula (a1) and (a2), the molar ratio (a1/b1) is (5 to 8)/(2 to 5), and the resin has a number average molecular weight of 20,000 to 50,000.

[CF 32]

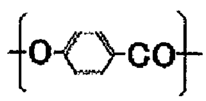

(a 1)

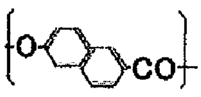

(a 2)

The number average molecular weight of the LCP resin (component A) is preferably 25,000 to 45,000, more preferably 30,000 to 40,000.

The melting point of the LCP resin (component A) is preferably 280°C to 360°C, more preferably 285°C to 350°C, much more preferably 290°C to 335°C from the viewpoints of dispersibility into the above polymer (component B), the suppression of the deterioration of physical properties caused by thermal decomposition at the time of melt kneading and the provision of heat resistance.

(production of liquid crystalline polyester resin (LCP resin))

The method of producing the LCP resin (component A) used in the present invention is not particularly limited,

and the LCP resin can be produced in accordance with a known polyester polycondensation method. For example, the following production methods are preferably employed.

(1) A method of producing a liquid crystalline polyester resin from a diacylated product of an aromatic dihydroxy compound such as p-acetoxybenzoic acid, 4,4'-diacetoxybiphenyl or diacetoxybenzene and an aromatic dicarboxylic acid such as 2,6-naphthalenedicarboxylic acid, terephthalic acid or isophthalic acid by an acetic acid-elimination polycondensation reaction.
(2) A method of producing a liquid crystalline polyester resin by reacting an aromatic dihydroxy compound such as p-hydroxybenzoic acid, 4,4'-dihydroxybiphenyl or hydroquinone and an aromatic dicarboxylic acid such as 2,6-naphthalenedicarboxylic acid, terephthalic acid or isophthalic acid with acetic anhydride to acylate a phenolic hydroxyl group and then carrying out an acetic acid-elimination polycondensation reaction.
(3) A method of producing a liquid crystalline polyester resin from a phenyl ester of p-hydroxybenzoic acid and a diphenyl ester of an aromatic dihydroxy compound such as 4,4'-dihydroxybiphenyl or hydroquinone and an aromatic dicarboxylic acid such as 2,6-naphthalenedicarboxylic acid, terephthalic acid or isophthalic acid by a phenol-elimination polycondensation reaction.
(4) A method of producing a liquid crystalline polyester resin by reacting a predetermined amount of a diphenyl carbonate with p-hydroxybenzoic acid and an aromatic dicarboxylic acid such as 2,6-naphthalenedicarboxylic acid, terephthalic acid or isophthalic acid to form diphenyl esters and adding an aromatic dihydroxy compound such as 4,4'-dihydroxybipheny or hydroquinone to carry out a phenol-elimination polycondensation reaction.
(5) A method of producing a liquid crystalline polyester resin by the method (1) or (2) in the presence of a polymer or oligomer of a polyester such as polyethylene terephthalate or a bis(β-hydroxyethyl)ester of an aromatic dicarboxylic acid such as bis(β-hydroxyethyl) terephthalate.

<polyamide resin>

The polyamide resin used in the present invention is a polyamide resin comprising amino acid, lactam or diamine and a dicarboxylic acid as the main constituent components. Typical examples of the main constituent components include amino acids such as 6-aminocaproic acid, 11-aminoundecanoic acid, 12-aminododecanoic acid and para-aminomethylbenzoic acid, lactams such as ε-caprolactam and ω-laurolactam, aliphatic, alicyclic and aromatic diamines such as pentamethylene diamine, hexamethylene diamine, 2-methylpentamethylene diamine, nonamethylene diamine, undecamethylene diamine, dodecamethylene diamine, 2,2,4-/2,4,4-trimethylhexamethylene diamine, 5-methylnonamethylene diamine, meta-xylylenediamine, para-xylylenediamine, 1,3-bis(aminomethyl)cyclohexane, 1,4-bis(aminomethyl)cyclohexane, 1-amino-3-aminomethyl-3,5,5-trimethyl cyclohexane, bis(4-aminocyclohexyl)methane, bis(3-methyl-4-aminocyclohexyl)methane, 2,2-bis(4-aminocyclohexyl)propane, bis(aminopropyl)piperazine and aminoethyl piperazine, and aliphatic, alicyclic and aromatic dicarboxylic acids such as adipic acid, suberic acid, azelaic acid, sebacic acid, dodecanedioic acid, terephthalic acid, isophthalic acid, 2-chloroterephthalic acid, 2-methylterephthalic acid, 5-methylisophthalic acid, 5-sodium sulfoisophthalic acid, 2,6-naphthalenedicarboxylic acid, hexahydroterephthalic acid and hexahydroisophthalic acid. In the present invention, nylon homopolymers or copolymers derived from these raw materials may be used alone or in combination.

The polyamide resin which is particularly useful in the present invention is a polyamide resin having high heat resistance with a melting point of 150°C or more and high strength. Examples of the polyamide resin include polycaproamide (nylon 6), polyhexamethylene adipamide (nylon 66), polypentamethylene adipamide (nylon 56), polyhexamethylene sebacamide (nylon 610), polyhexamethylene dodecanamide (nylon 612), polyundecanamide (nylon 11), polydodecanamide (nylon 12), polycaproamide/polyhexamethylene adipamide copolymer (nylon 6/66), polycaproamide/polyhexamethylene terephthalamide copolymer (nylon 6/6T), polyhexamethylene adipamide/polyhexamethylene terephthalamide copolymer (nylon 66/6T), polyhexamethylene adipamide/polyhexamethylene isophthalamide copolymer (nylon 66/6I), polyhexamethylene terephthalamide/polyhexamethylene isophthalamide copolymer (nylon 6T/6I), polyhexamethylene terephthalamide/polydodecanamide copolymer (nylon 6T/12), polyhexamethylene adipamide/polyhexamethylene terephthalamide/polyhexamethylene isophthalamide copolymer (nylon 66/6T/6I), polyxylylene adipamide (nylon XD6), polyhexamethylene terephthalamide/poly-2-methylpentamethylene terephthalamide copolymer (nylon 6T/M5T), polynonamethylene terephthalamide (nylon 9T) and mixtures thereof.

Particularly preferred polyamide resins include polymers having a hexamethylene terephthalamide unit such as nylon 6, nylon 66, nylon 12, nylon 610, nylon 6/66 copolymer, nylon 6T/66 copolymer, nylon 6T/6I copolymer, nylon 6T/12 and nylon 6T/6 copolymer. Further, it is practically advantageous to use a mixture of two or more of these polyamide resins according to required properties such as impact resistance and moldability.

Although the polymerization degree of each of these polyamide resins is not particularly limited, polyamide resins having a relative viscosity measured at 25°C in a 98% concentrated sulfuric acid solution having a sample concentration of 0.01 g/ml of preferably 1.5 to 7.0, particularly preferably 2.0 to 6.0 are desirable.

The content of the polyamide resin used in the present invention is 95 to 60 wt%, preferably 90 to 70 wt%.

(composition ratio)

The resin composition of the present invention comprises 100 parts by mass of the thermoplastic resin (component A) and 3 to 900 parts by mass of the polymer (component B).

The upper limit of the content of the polymer (component B) is preferably 700 parts by mass, more preferably 500 parts by mass based on 100 parts by mass of the thermoplastic resin (component A). The lower limit of the content of the polymer (component B) is preferably 90 parts by mass, more preferably 100 parts by mass based on 100 parts by mass of the thermoplastic resin (component A).

When the resin composition of the present invention further comprises another thermoplastic resin (component C), the content of this thermoplastic resin (component C) is preferably 10 to 450 parts by mass, more preferably 20 to 400 parts by mass based on 100 parts by mass of the thermoplastic resin (component A).

When the content of the component B is higher than that of the component A in the resin composition of the present invention, in general, the component A forms an island phase and the component B forms a sea phase. When the content of the component A is higher than that of the component B, in general, the component B forms the island phase and the component A forms the sea phase. Since the resin composition of the present invention comprises the polymer having a substituent derived from a carboxylic acid or anhydride thereof in the side chain (component B), when the resin composition is melt kneaded to be formed into a pellet, the particle diameter Dr of the island phase is small, thereby obtaining high dispersibility. The particle diameter Dr of this island phase is in the range of 0.1 μm to 100 pm, preferably 5 μm to 50 pm, more preferably 10 μm to 45 μm.

<molding>

The molding of the present invention is composed of the above resin composition. The molding of the present invention is preferably a film or sheet. The molding of the present invention is excellent in the dispersibility of the thermoplastic resin (component A) contained in the resin composition due to interaction between the thermoplastic resin (component A) and the polymer having a carboxyl group or anhydrous carboxyl group in the side chain (component B).

Preferably, the molding comprises the component A as the island phase or sea phase and the component B as the sea phase or island phase and has (i) a relative dielectric constant of 2.0 to 4.0, (ii) a dielectric loss tangent of $1.0 \times 10^{-4}$ to $1.0 \times 10^{-2}$ and (iii) a particle diameter Dr of the island phase of 0.5 μm to 80 μm.

When the content of the component B is higher than that of the component A, in general, the component A forms the island phase and the component B forms the sea phase. When the content of the component A is higher than that of the component B, in general, the component B forms the island phase and the component A forms the sea phase.

(relative dielectric constant)

The molding of the present invention has a relative dielectric constant of 2.0 to 4.0. The upper limit of the relative dielectric constant is preferably 3.8, more preferably 3.5. The lower limit of the relative dielectric constant is preferably 2.2, more preferably 2.5.

(dielectric loss tangent)

The molding of the present invention has a dielectric loss tangent of $1.0 \times 10^{-4}$ to $1.0 \times 10^{-2}$. The upper limit of the dielectric loss tangent is preferably $5.0 \times 10^{-3}$, more preferably $3.0 \times 10^{-3}$. The lower limit of the dielectric loss tangent is preferably $5.0 \times 10^{-4}$, more preferably $1.0 \times 10^{-3}$.

(three-component molding)

When the molding of the present invention is composed of a resin composition comprising the thermoplastic resin (component A), the polymer (component B) and another thermoplastic resin (component C), preferably, the molding comprises the component A as the island phase or sea phase and the component B as the sea phase or island phase and has (i) a relative dielectric constant of 2.0 to 4.0, (ii) a dielectric loss tangent of $1.0 \times 10^{-4}$ to $1.0 \times 10^{-2}$ and (iii) a particle diameter Dr of the island phase of 0.5 μm to 80 μm.

When the content of the component C is higher than that of the component A, in general, the component A forms the island phase and the component C forms the sea phase. When the content of the component A is higher than that of the component C, in general, the component C forms the island phase and the component A forms the sea phase.

<filler, etc.>

The resin composition may comprise a filler. The filler may be selected from calcium carbonate, glass fibers, glass flakes, carbon fibers, wollastonite, whiskers, crushed glass, mica, barium sulfate, talc, silica and arbitrary combinations thereof. More specifically, the filler may be selected from calcium carbonate and glass fibers. Much more specifically, the filler may contain calcium carbonate and glass fibers.

The filler may be contained in an amount of 40 to 70 wt%, more specifically 40 to 65 wt% based on the total weight of the resin composition. The resin composition may comprise 20 to 60 wt% of PPS resin, 0.5 to 10 wt% of phenoxy resin, 0.5 to 15 wt% of glass beads, 40 to 70 wt% of the filler and 0.05 to 2.0 wt% of hydrotalcite.

Typical additives such as heat-resistant stabilizer, lubricant, antistatic agent, nucleating agent, slip agent, pigment and a combination thereof may be further added to the resin composition in appropriate amounts as required.

[modes of resin composition and molding] <molding containing LCP resin and polymer (I)>

Since the LCP resin has a low dielectric constant, a high signal speed, a low dielectric loss tangent and a small electric energy loss, its use as a substrate material for high-frequency circuits is now under way. However, as molecular orientation occurs in a monoaxial direction in the LCP resin, fibrillation or surface roughness tends to occur, whereby there is room for the improvement of moldability.

To make use of the excellent properties of the LCP resin and the polyphenylene sulfide resin (PPS resin), various studies are being made on an alloy of the LCP resin and the PPS resin.

However, since the LCP resin has high aggregation force and a small free volume due to its special molecular structure that rigid mesogens which are liquid crystal structures are arranged without any space therebetween, if a fine dispersion structure can be formed temporarily in an alloy of the LCP resin and the PPS resin, the liquid crystalline polyester phase aggregates again by heat retention and the change of the physical shear field, thereby making it impossible to obtain a stable material. Therefore, it is desired to improve the dispersion structure of the alloy of the LCP resin and the PPS resin.

It is therefore an object of the present invention to provide a molding which is composed of a resin composition comprising the LCP resin and the polymer (I) derived from the PPS resin, has high dispersibility, a low relative dielectric constant and a low dielectric loss tangent and is suitable for use as a substrate material for high-frequency circuits.

The inventors of the present invention found that a molding composed of a resin composition prepared by adding a polyphenylene sulfide resin having a substituent derived from a carboxylic acid or anhydride thereof (the above polymer (I), component B) to the LCP resin (component A) has excellent dispersibility, a low relative dielectric constant and a low dielectric loss tangent and is suitable for use as a substrate material for high-frequency circuits. The present invention was accomplished based on this finding.

Preferably, the molding is composed of a resin composition comprising 100 parts by mass of the LCP resin (component A) and 10 to 900 parts by mass of the polymer (I).

The structure of the polymer (I) is as described above. The upper limit of the content of the polymer (I) is preferably 800 parts by mass, more preferably 700 parts by mass, much more preferably 500 parts by mass based on 100 parts by mass of the LCP resin (component A). The lower limit of the content of the polymer (I) is preferably 20 parts by mass, more preferably 90 parts by mass, much more preferably 100 parts by mass based on 100 parts by mass of the LCP resin (component A).

Preferably, the molding comprises the component A as the island phase and the component B as the sea phase and has (i) a relative dielectric constant of 2.0 to 4.0, (ii) a dielectric loss tangent of $1.0 \times 10^{-4}$ to $1.0 \times 10^{-2}$, and (iii) a particle diameter Dr of the island phase of 0.5 $\mu$m to 80 $\mu$m.

The LCP resin (component A) contains units represented by the following formulas (a1) and (a2) in the main chain, and the molar ratio (a1/a2) is preferably (5 to 8)/(5 to 2). The number average molecular weight of the LCP resin (component A) is preferably 20,000 to 50,000, more preferably 25,000 to 45,000, much more preferably 30,000 to 40,000.

[CF 33]

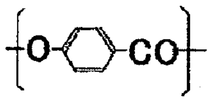

(a 1)

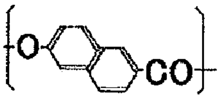

(a 2)

In the molding, the component A forms the island phase and the component B forms the sea phase. The particle diameter Dr of the island phase is in the range of preferably 5 μm to 50 pm, more preferably 10 μm to 45 μm. The resin composition has excellent dispersibility with a small particle diameter Dr of the island phase. The molding is excellent in dispersibility, dispersion stability and film processability.

<molding comprising polyamide resin (component A) and polymer (I)>

Preferably, the molding is composed of a resin composition comprising 100 parts by mass of a polyamide resin (component A) and 75 to 900 parts by mass of the polymer (I).
The structure of the polymer (I) is as described above.
The upper limit of the content of the polymer (I) is preferably 800 parts by mass, more preferably 400 parts by mass based on 100 parts by mass of the polyamide resin (component A). The lower limit of the content of the polymer (I) is preferably 4 parts by mass, more preferably 5 parts by mass based on 100 parts by mass of the polyamide resin (component A).
The polyamide resin (component A) is at least one resin selected from the group consisting of nylon 6, nylon 11, nylon 12, nylon 66, nylon 610, nylon 6T and nylon 9T. The molecular weight of the polyamide resin (component A) is preferably 10,000 to 500,000.
In the molding, either one of the component A and the component B may form the sea phase or the island phase. The particle diameter Dr of the island phase is in the range of 0.1 μm to 100 pm, preferably 0.3 μm to 80 pm, more preferably 0.5 μm to 50 μm. The resin composition has excellent dispersibility with a small particle diameter Dr of the island phase. The molding is excellent in dispersibility, dispersion stability and film processability. In Examples 4 and 5, the component A forms the sea phase and the component B forms the island phase.

<molding comprising LCP resin (component A), PPS resin (component C) and polymer (I)>

An example of the molding is a molding composed of a resin composition comprising the LCP resin (component A), a polyphenylene sulfide resin having a recurring unit represented by the following formula (PPS resin) as the component C and the polymer (I) as the component B.
The molecular weight in terms of weight average molecular weight of the PPS resin is preferably 10,000 or more, more preferably 15,000 or more, much or preferably 18,000 or more.

[CF 34]

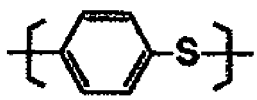

The LCP resin (component A) contains units represented by the following formulas (a1) and (a2) in the main chain, and the molar ratio (a1)/(a2) is preferably (5 to 8)/(5 to 2). The number average molecular weight of the LCP resin (component A) is preferably 20,000 to 50,000, more preferably 25,000 to 45,000, much more preferably 30,000 to 40,000.

[CF 35]

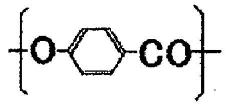

(a 1)

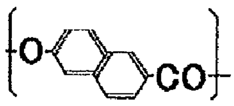

(a 2)

The polymer (I) has a structure derived from polyphenylene sulfide as described above.

The upper limit of the content of the polymer (I) is preferably 700 parts by mass, more preferably 500 parts by mass based on 100 parts by mass of the component A. The lower limit of the content of the polymer (I) is preferably 3 parts by mass, more preferably 10 parts by mass based on 100 parts by mass of the LCP resin (component A).

In the molding, either one of the components A and C forms the sea phase or the island phase. The component B is existent at the interface between the sea phase and the island phase as a compatibilizing agent. The particle diameter Dr of the island phase is in the range of 0.1 μm to 100 pm, preferably 0.5 μm to 80 pm, more preferably 1 μm to 50 μm. The resin composition has excellent dispersibility with a small particle diameter Dr of the island phase. The molding is excellent in dispersibility, dispersion stability and film processability. In Examples 6, 7, 8 and 9, the component C forms the sea phase and the component A forms the island phase.

<molding comprising polyamide resin (component A), PPS resin (component C) and polymer (I)>

Another example of the molding is a molding composed of a resin composition comprising a polyamide resin, a polyphenylene sulfide resin having a recurring unit represented by the following formula (PPS resin) as the component C and the polymer (I) as the component B. The molecular weight in terms of weight average molecular weight of the PPS resin is preferably 10,000 or more, more preferably 15,000 or more, much more preferably 18,000 or more.

[CF 36]

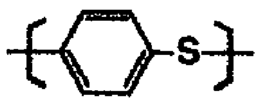

The polyamide resin (component A) is at least one resin selected from the group consisting of nylon 6, nylon 11, nylon 12, nylon 66, nylon 610, nylon 6T and nylon 9T. The molecular weight in terms of number average molecular weight of the polyamide resin (component A) is preferably 10,000 to 100,000, more preferably 15,000 to 80,000.

The structure of the polymer (I) is as described above. The upper limit of the content of the polymer (I) is preferably 800 parts by mass, more preferably 400 parts by mass based on 100 parts by mass of the component A. The lower limit of the content of the polymer (I) is preferably 4 parts by mass, more preferably 5 parts by mass based on 100 parts by mass of the polyamide resin (component A).

In the molding, the component A forms the island phase and the component C forms the sea phase. The particle diameter Dr of the island phase is in the range of 0.1 μm to 100 pm, preferably 0.3 μm to 80 pm, more preferably 0.5 μm to 50 μm. The resin composition has excellent dispersibility with a small particle diameter Dr of the island phase. The molding is excellent in dispersibility, dispersion stability and film processability.

<molding comprising LCP resin and polymer (II)>

Still another example of the molding is a molding composed of a resin composition comprising the LCP resin and the polymer (II) (PEEK).

The LCP resin (component A) contains units represented by the following formulas (a1) and (a2) in the main

chain, and the molar ratio (a1)/(a2) is preferably (5 to 8)/(5 to 2). The number average molecular weight of the LCP resin (component A) is preferably 20,000 to 50,000, more preferably 25,000 to 45,000, much more preferably 30,000 to 40,000.

[CF 37]

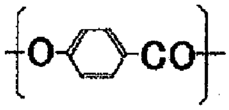

(a 1)

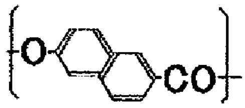

(a 2)

The polymer (II) is a polymer derived from PEEK as described above. The polymer (II) contains units represented by the formulas (II-1), (II-2) and (II-3). When the total number of moles of the unit (II-1), the unit (II-2) and the unit (II-3) is 100, the number of moles of the unit (II-1) is preferably 20 to 50, the number of moles of the unit (II-2) is preferably 20 to 40, and the number of moles of the unit (II-3) is preferably 10 to 60.
The upper limit of the content of the polymer (II) is preferably 800 parts by mass, more preferably 700 parts by mass based on 100 parts by mass of the component (A). The lower limit of the content of the polymer (II) is preferably 10 pars by mass, more preferably 20 parts by mass based on 100 parts by mass of the LCP resin (component A).
In the molding, the component A forms the island phase and the component B forms the sea phase. The particle diameter Dr of the island phase is in the range of 0.1 μm to 100 pm, preferably 0.5 μm to 80 pm, more preferably 1 μm to 50 μm. The resin composition has excellent dispersibility with a small particle diameter Dr of the island phase. The molding is excellent in dispersibility, dispersion stability and film processability.

<molding comprising LCP resin or polyamide resin (component A) and polymer (V)>

A further example of the molding is a molding composed of a resin composition comprising the LCP resin or polyamide resin and the polymer (V).
The LCP resin (component A) contains units represented by the following formula (a1) and (a2) in the main chain, and the molar ratio (a1)/(a2) is preferably (5 to 8)/(5 to 2). The number average molecular weight of the LCP resin (component A) is preferably 20,000 to 50,000, more preferably 25,000 to 45,000, much more preferably 30,000 to 40,000.

[CF 38]

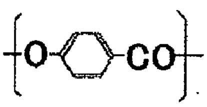

(a 1)

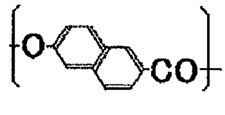

(a 2)

The polyamide resin (component A) is at least one resin selected from the group consisting of nylon 6, nylon 11, nylon 12, nylon 66, nylon 610, nylon 6T and nylon 9T. The molecular weight in terms of number average molecular weight of the polyamide resin (component A) is preferably 10,000 to 100,000, more preferably 15,000 to 80,000.
The polymer (V) is a polymer derived from polystyrene as described above. The polymer (V) contains units represented by the formulas (V-1), (V-2) and (V-3). When the total number of moles of the unit (V-1), the unit (V-2) and the unit (V-3) is 100, the number of moles of the unit (V-1) is preferably 20 to 50, the number of moles of the unit (V-2) is preferably 20 to 40, and the number of moles of the unit (V-3) is preferably 10 to 60.

The upper limit of the content of the polymer (V) is preferably 700 parts by mass, more preferably 500 parts by mass based on 100 parts by mass of the component A. The lower limit of the content of the polymer (I) is preferably 10 parts by mass, more preferably 20 parts by mass based on 100 parts by mass of the LCP resin (component A).
In the molding, the component A forms the island phase and the component B forms the sea phase. The particle diameter Dr of the island phase is in the range of 0.1 $\mu$m to 100 pm, preferably 0.5 $\mu$m to 80 pm, more preferably 1 $\mu$m to 50 $\mu$m. The resin composition has excellent dispersibility with a small particle diameter Dr of the island phase. The molding is excellent in dispersibility, dispersion stability and film processability.

EXAMPLES

The following examples are provided for the purpose of further illustrating the present invention but are in no way to be taken as limiting.

1. Measurement of characteristic properties of resin composition (pellet) and resin molding (film)

The characteristic properties of the resin composition (pellet) and the resin molding (film) were measured by the following methods.

(1) particle diameter Dr of island phase

Supposing that the shape of the island phase is circular, the diameter calculated from the area of the island phase is taken as the particle diameter Dr of the island phase. That is, when the area of the island phase is represented by S, the particle diameter Dr is expressed by $(4S/\pi)^{1/2}$.
The particle diameter Dr of the island phase in the present invention is defined by weight average. That is, when the particle diameter of each of 20 arbitrary island phases in the resin composition (pellet) or the resin molding (film) is represented by Dri, the weight average particle diameter Dr of the island phase is obtained from the following equation.

$$\text{Weight average particle diameter Dr of island phase} = (\Sigma Dri^2)/(\Sigma Dri).$$

(2) dispersion stability

The dispersion stability is expressed by the ratio ($Dr^f/Dr^p$) of the weight average particle diameter $Dr^f$ of the island phase in the resin molding (film) to the weight average particle diameter $Dr^p$ of the island phase in the resin composition (pellet).

(3) film processability

The processability (foldability) of the film was evaluated as follows.

When it is folded, it is not broken: 2 points
When it is folded strongly, it is broken: 1 point
It is easily broken: 0 point

(4) relative dielectric constant and dielectric loss tangent

The complex relative dielectric constant was measured by a split cylinder method at a measurement frequency of 28 GHz using the N5290A network analyzer of Keysight Technologies and the 28GHz CR-728 split cylinder resonator of Kanto Electronic Application and Development Inc. The relative dielectric constant and the dielectric loss tangent were obtained from the obtained result.

2. Commercially available resins in use

The commercially available resins in use are as follows.

(LCP resin)

The Vectra A950 (number average molecular weight of 35,000) of Ticona GmbH having recurring units represented by the following formulas (a1) and (a2) was used as the LCP resin (LCP-C).

[CF 39]

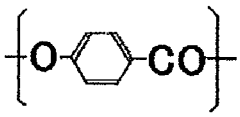

(a 1)

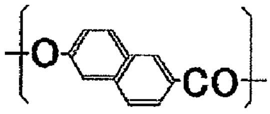

(a 2)

(PPS-C)

A polyphenylene sulfide resin (ECOTRAN B200 of INITZ, weight average molecular weight of 30,000 to 60,000) was used as PPS-C.

(PA6)

Polycaproamide (nylon 6) (manufactured by BASF, product name: Ultramid B3F, number average molecular weight of 20,000 to 50,000) was used as PA6.

(PA12)

Polydodecanamide (nylon 12) (manufactured by Ube Corporation, product name: UBESTA 3020, number average molecular weight of 20,000 to 50,000) was used as PA12.

[Examples 1 to 2, Comparative Examples 1 to 2] polymer (I) PPS-3

<measurement of characteristic properties of PPS resin>

PPS-3 and PPS-4 both having a carboxylic anhydride group in the side chain, PPS-1 having a phenyl group at the terminal of the main chain and commercially available PPS-C may be referred to as "PPS resin".

The melting point (Tm), number average molecular weight (Mn), polydispersity index (PDI) and melt viscosity (MV) of each of the PPS resins were measured by the following methods.

(1) melt viscosity

The melt viscosity was measured at Tm+20°C with a rotary disk type viscometer. In the frequency sweeping method, the angular frequency was measured at 0.6 to 500 rad/s, and viscosity at 1.0 rad/s was defined as melt viscosity.

(2) melting point

The melting point was measured with a differential scanning calorimeter (DSC) by raising the temperature from 30°C to 320°C at a rate of 20°C/m, reducing the temperature to 30°C and then raising the temperature from 30°C to 320°C at a rate of 20°C/m.

(3) number average molecular weight (Mn) and polydispersity index (PDI)

A sample was prepared by dissolving the PPS resins in 1-chloronaphthalene at 250°C for 25 minutes under agitation to obtain a 0.4 mass% solution. Thereafter, the sample solution was let flow in the column of a high-temperature

gel permeation chromatography (GPC) system (210°C) at a flow rate of 1 mL/m to separate the PPS resins having different molecular weights so as to measure strength corresponding to the molecular weight of each separated PPS resin by using an R1 detector. After the calibration curve of a standard sample (polystyrene) whose molecular weight is known was formed, the relative number average molecular weight (Mn) and polydispersity index (PDI) of the sample were calculated.

(4) calculation of copolymerization ratios (calculation of S1/S2, S1/S2/S3, S1/S2/S4)

The copolymerization ratio was calculated by carrying out 13C-NMR (DD/MAS) measurement with the DSX300WB NMR device of Bruker to calculate the area ratio of peaks derived from monomers.

<Example 1> polymer (I) (PPS-3)

PPS resin (PPS-3) having a group derived from maleic anhydride in the side chain was prepared by the following method.

(preparation of polymer (i))

32.6 parts by mass of sodium sulfide, 0.04 part by mass of sodium hydroxide and 79 parts by mass of NMP were fed to an autoclave, stirred and heated up to 200°C. Then, 110.25 parts by mass of 1,4-dichlorobenzene (Mw=147.00), 44.64 parts by mass (0.25 mole) of 2,5-dichloro-p-xylene (Mw=175.05), 0.302 part by mass (0.277 mole) of 1,4-bezoquinone (Mw=108.10) and 20 part by mass of NMP were added. The reaction system was heated up to 260°C and stirred for 1 hour. Thereafter, the resulting product was cooled and filtered with a 100-mesh filter, and the residue was washed with 130°C hot water twice. Further, the residue was filtered and dried under reduced pressure to obtain a polymer (i) having a structure represented by the following formula (pps-3).

Although the charge ratio (s1)/(s2) was 75/25, the (s1)/(s2) of the obtained polymer (i) was 5.5/1 (molar ratio). The number average molecular weight (Mn) in terms of polystyrene of the polymer (i) (pps-3) was 20,000, the weight average molecular weight (Mw) was 45,000, and Mw/Mn was 2.25.

[CF 40]

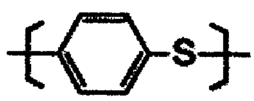

(s 1)

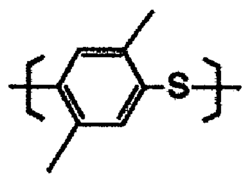

(s 2)

(melt kneading)

The obtained polymer (i) (pps-3) and maleic anhydride were dry blended together in a weight ratio of 20/1, supplied from a resin feeder and melt kneaded together at a resin temperature of 300°C by using the TEM26-SS twin-screw extruder (of Toshiba Machine Co., Ltd.) to obtain a polymer (I) having structures represented by the following formulas (PPS-3) as a pellet.

[CF 41]

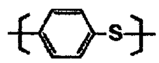

(S1)

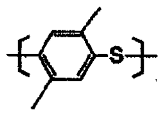

(S2)

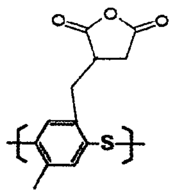

(S3)

The molar ratio (S1)/(S2)/(S3) of the obtained PPS-3 was 80/2/18. The number average molecular weight (Mn) in terms of polystyrene of PPS-3 was 23,000, the weight average molecular weight (Mw) was 50,000, and Mw/Mn was 2.17.

The copolymerization ratio was calculated by carrying out 13C-NMR (DD/MAS) measurement with the DSX300WB NMR device of Bruker to calculate the area ratio of peaks derived from monomers.

The melt viscosity was measured at Tm+20°C with a rotary disk type viscometer. In the frequency sweeping method, the angular frequency was measured at 0.6 to 500 rad/s, and viscosity at 1.0 rad/s was defined as melt viscosity.

The melting point was measured with a differential scanning calorimeter (DSC) by raising the temperature from 30°C to 320°C at a rate of 20°C/m, reducing the temperature to 30°C and then raising the temperature from 30°C to 320°C at a rate of 20°C/m.

<Example 2> preparation of PPS-4

PPS resin (PPS-4) having a group derived from citric anhydride in the side chain was prepared by the following method. The polymer (i) was prepared in the same manner as in Example 1, and the obtained polymer (i) (pps-4) and citric acid were dry blended together in a weight ratio of 20/1, supplied from a resin feeder and melt kneaded together at a resin temperature of 300°C by using the TEM26-SS twin-screw extruder (of Toshiba Machine Co., Ltd.) to obtained PPS-4 having structures represented by the following formulas as a pellet.

[CF 42]

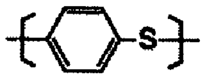

(S 1)

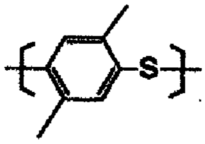

(S 2)

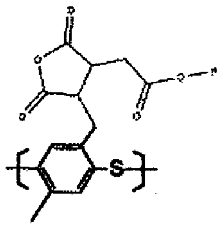

(S 4)

The molar ratio (S1)/(S2)/(S4) of the obtained PPS-4 was 80/2/18. The number average molecular weight (Mn) in terms of polystyrene of PPS-4 was 23,000, the weight average molecular weight (Mw) was 50,000, and Mw/Mn was 2.17. The copolymerization ratio was obtained by carrying out 13C-NMR (DD/MAS) measurement with the DSX300WB NMR device of Bruker to calculate the area ratio of peaks derived from monomers.

The melt viscosity was measured at Tm+20°C with a rotary disk type viscometer. In the frequency sweeping method, the angular frequency was measured at 0.6 to 500 rad/s, and viscosity at 1.0 rad/s was defined as melt viscosity.

The melting point was measured with a differential scanning calorimeter (DSC) by raising the temperature from 30°C to 320°C at a rate of 20°C /min, reducing the temperature to 30°C and then raising the temperature from 30°C to 320°C at a rate of 20°C/min.

<Example 3> resin composition and film

Commercially available LCP resin (LCP-C) and PPS resin (PPS-3) were dry blended together in a ratio shown in Table 1 by using the TEM26-SS twin-screw extruder (of Toshiba Machine Co., Ltd.), supplied from a resin feeder, added in a ratio shown in Table 1 by using a weighing side feeder and melt kneaded together at a resin temperature of 300°C to obtain a resin composition pellet.

Then, this pellet was formed into a 0.2 mm-thick, 40 mm-wide and 40 mm-long film substrate for high-frequency circuits at a resin temperature of 300°C and a mold temperature of 130°C by using a molding machine. The dispersion stability, film processability, relative dielectric constant and dielectric loss tangent of the obtained substrate are shown in Table 1.

<Comparative Examples 1 to 2>

(preparation of PPS-1)

PPS resin (PPS-1) having a phenyl group at the terminal of the main chain was prepared by the following method.

A reaction product comprising 5,130 parts by mass of p-diiodobenzene (p-DIB), 450 parts by mass of sulfur and 4 parts by mass of 1,3-diiodo-4-nitrobenzene as a reaction initiator was completely melted and mixed in a 5-L reactor having a thermocouple capable of measuring the inside temperature of the reactor and a vacuum line for nitrogen purge and evacuation by heating the reactor up to 180°C, and then a polymerization reaction was carried out for 4 hours by raising the temperature and reducing the pressure stepwise from the initial reaction conditions of 220°C and 350 Torr to the final reaction temperature of 300°C and 0.6 to 0.9 Torr while sulfur was added 7 times (19 parts by mass each time).

After 80 % of the polymerization reaction proceeded (the progress of the polymerization reaction is specified

by relative viscosity ratio [(current viscosity/target viscosity)] and the current viscosity was measured with a viscometer after the sample was collected from the reactor in which the polymerization reaction was proceeding. The target viscosity was set to 600 poise), 35 parts by mass of diphenyl disulfide was added as a polymerization inhibitor and the reaction was carried out for 1 hour to obtain PPS-1 having structures represented by the following formulas (b1) and (b2).

[CF 43]

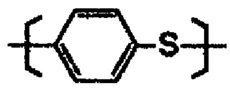

(b 1)

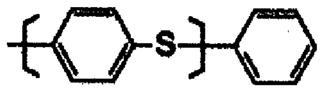

(b 2)

The number average molecular weight (Mn) in terms of polystyrene of PPS-1 was 7,520, the weight average molecular weight (Mw) was 41,700, and Mw/Mn was 5.55. The number of the terminal phenyl groups in one molecular chain of the polymer was 1 to 2.

(resin composition and film)

A resin composition pellet was prepared to produce a film in the same manner as in Example 3 except that the ratio of LCP resin and PPS resin was changed as shown in Table 1. The dispersion stability, film processability, relative dielectric constant and dielectric loss tangent of the obtained substrate are shown in Table 1.

[Table 1]

| | | Ex.3 | C.Ex.1 | C.Ex.2 |
|---|---|---|---|---|
| LCP resin (component A) | LCP-C | 100 | 100 | 100 |
| PPS resin (component B) | PPS-1 | - | 150 | 400 |
| | PPS-3 | 150 | - | - |
| Characteristic property of pellet | Particle diameter Dr (um) | 27 | 50 | 42 |
| Characteristic property of film | Film processability | 2 | 0 | 0 |
| | Relative dielectric constant | 3.20 | 3.21 | 3.24 |
| | Dielectric loss tangent | $2.49 \times 10^{-3}$ | $2.25 \times 10^{-3}$ | $2.31 \times 10^{-3}$ |
| | Particle diameter Dr (um) in film | 24 | 100 | 86 |
| | Dispersion stability | 0.89 | 2 | 2.0 |
| Ex.: Example, C.Ex.: Comparative Example | | | | |

When Examples 3 is compared with Comparative Examples 1 and 2, it is understood that the molding of Example 3 in which PPS-3 was used is excellent in dispersion stability because the ratio ($Dr^f/Dr^p$) of the weighted average particle diameter $Dr^f$ of the island phase in the resin molding (film) to the weighted average particle diameter $Dr^p$ of the island phase (LCP resin) in the resin composition (pellet) is low.

<Examples 4 to 5, Comparative Examples 3 to 4> PPS resin+polyamide resin

Films were produced in the same manner as in Example 3 except that PPS-3 having a group derived from maleic anhydride in the side chain was used as PPS resin and the ratios of polyamide resin (PA6 (polycaproamide (nylon 6)) and PA12 (polydodecanamide (nylon 12)) to PPS-3 were changed as shown in Table 2. The films in which the polyamide resin formed the sea phase and PPS-3 and PPS-C were dispersed as island phases were obtained. The dispersion stability, particle diameter Dr and film processability of each of the films and the particle diameter Dr in the

film are shown in Table 2.

[Table 2]

| Example | Ex. 4 | Ex.5 | C.Ex.3 | C.Ex.4 |
|---|---|---|---|---|
| Composition | PA6/PPS-3 | PA12/PPS-3 | PA6/PPS-C | PA12/PPS-C |
| Ratio of composition | 8/2 | 8/2 | 7.5/2.5 | 7.2/2.5 |
| dispersion stability | 2 | 2 | 0 | 0 |
| Particle diameter Dr (μm) | 0.6 | 0 . 8 | 30 | 25 |
| film processability | 2 | 2 | 0 | 0 |
| particle diameter Dr (μm) in the film | 0.7 | 0.9 | 100 | 90 |
| Ex.: Example, C.Ex.: Comparative Example | | | | |

<Examples 6 to 9> PPS-C+PPS-3+LCP-C

PPS-C (commercially available product), LCP resin (commercially available product, LCP-C) and PPS resin (PPS-3) were dry blended together in a ratio shown in Table 3 by using the TEM26-SS twin-screw extruder (of Toshiba Machine Co., Ltd.), supplied from a resin feeder, added in a ratio shown in Table 3 by using a weighing side feeder and melt kneaded together at a resin temperature of 300°C so as to obtain a pellet. The pellet in which PPS-C formed the sea phase and LCP-C was dispersed as the island phase was obtained.

Then, this pellet was formed into a 0.2 mm-thick, 40 mm-wide and 40 mm-long film at a resin temperature of 300°C and a mold temperature of 130°C by using a molding machine. The dispersion stability, particle diameter Dr and film processability of each of the obtained films and the particle diameter Dr in the film are shown in Table 3.

[Table 3]

| Example | Ex. 6 | Ex. 7 | Ex . 8 | Ex. 9 |
|---|---|---|---|---|
| Composition | PPS-C/PPS-3/LCP-C | PPS-C/PPS-3/LCP-C | PPS-C/PPS-3/LCP-C | PPS-C/PPS-3/LCP-C |
| Ratio of composition | 4/2/4 | 6/2/2 | 7/1/2 | 7.5/0.5/2 |
| dispersion stability | 2 | 2 | 2 | 2 |
| Particle diameter Dr (μm) | 34 | 24 | 26 | 23 |
| film processability | 2 | 2 | 2 | 2 |
| particle diameter Dr (μm) in the film | 36 | 20 | 25 | 26 |
| Ex.: Example | | | | |

<Examples 10 to 11> polyamide+PPS-3+PPS-C

PPS resin (commercially available product, PPS-C), PPS resin (PPS-3) and commercially available polyamide resin (PA6, PA12) were dry blended together in a ratio shown in Table 4 by using the TEM26-SS twin-screw extruder (of Toshiba Machine Co., Ltd.), supplied from a resin feeder, added in a ratio shown in Table 4 by using a weighing side feeder and melt kneaded together at a resin temperature of 300°C so as to obtain a pellet. The pellet in which the polyamide resin formed the sea phase and PPS-C was dispersed as the island phase was obtained.

Then, this pellet was formed into a 0.2 mm-thick, 40 mm-wide and 40 mm-long film at a resin temperature of 310°C and a mold temperature of 130°C by using a molding machine. The dispersion stability, particle diameter Dr and film processability of each of the obtained films and the particle diameter Dr in the film are shown in Table 4.

[Table 4]

| Example | Example 10 | Example 11 |
|---|---|---|
| Composition | PA6/PPS-3/PPS-C | PA12/PPS-3/PPS-C |
| Ratio of composition | 7.5/0.5/2 | 7.5/0.5/2 |
| dispersion stability | 2 | 2 |
| Particle diameter Dr (μm) | 0.9 | 0.8 |
| film processability | 2 | 2 |
| particle diameter Dr (μm) in the film | 1.2 | 1.2 |

[Examples 12 to 13, Comparative Example 5] polymer (II)

<Example 12> production of PEEK copolymer (preparation of polymer (ii))

peek-1 having a methyl group in the side chain was prepared by the following method. That is, 29.5 parts by mass of 4,4-difluorobenzophenone, 7.3 parts by mass of hydroquinone, 8.3 parts by mass of methyl hydroquinone, 223 parts by mass of sulfolane and 5.3 parts by mass of potassium carbonate were fed to an autoclave and stirred at 300°C for 4 hours. After heating was stopped to cool the reaction product, 220 parts by mass of ion exchange water was added to wash the product with hot water. Thereafter, the product was cooled and filtered with a 100-mesh filter and then, the residue was washed with 130°C hot water twice. The residue was further filtered and dried under reduced pressure to obtain peek-1 having units represented by the following formulas (ee1) and (ee2) .

[CF 44]

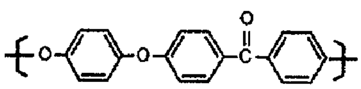

(e e 1)

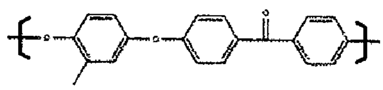

(e e 2)

The molar ratio (ee1)/(ee2) of peek-1 was 54/46. The reduced viscosity $\eta_{sp}$/C of peek-1 was 0.2.

The copolymerization ratio was calculated by carrying out 1H-NMR measurement with the DSX300WB NMR device of Bruker using a mixed solution of trifluoroacetic acid and chloroform as a solvent. The reduced viscosity was calculated by measuring solution viscosity using sulfuric acid as a solvent.

(melt kneading)

The obtained peek-1 and citric acid were dry blended together in a weight ratio of 20/1, supplied from a resin feeder and melt kneaded together at a resin temperature of 300°C by using the TEM26-SS twin-screw extruder (of Toshiba Machine Co., Ltd.) to obtain PEEK-1 having structures represented by the following formulas as a pellet.

[CF 45]

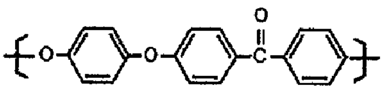

(EE1)

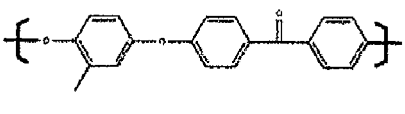

(EE2)

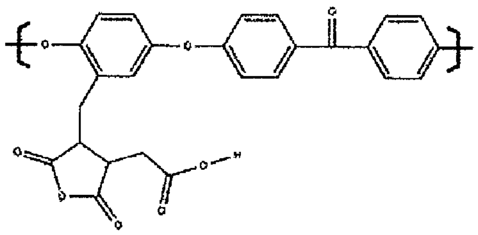

(EE3)

The molar ratio (EE1)/(EE2)/(EE3) of the obtained PEEK-1 was 54/20/26. The molecular weight in terms of weight average molecular weight of PEEK-1 was 160,000. Measurement method of molecular weight: GPC measurement was carried out by using GPC of Showa Denko K.K. and chlorophenol and dichlorobenzene as eluates. The molecular weight was obtained by using polystyrene as a reference material. The copolymerization ratio was calculated by carrying out 1H-NMR measurement with the DSX300WB NMR device of Bruker using a mixed solution of trifluoroacetic acid and chloroform as a solvent.

<Example 13> resin composition and film

LCP resin (LCP-C) and PEEK-1 were dry blended together in a ratio shown in Table 5 by using the TEM26-SS twin-screw extruder (of Toshiba Machine Co., Ltd.), supplied from a resin feeder, added in a ratio shown in Table 5 by using a weighing side feeder and melt kneaded together at a resin temperature of 300°C to obtain a pellet. The pellet in which PEEK-1 formed the sea phase and LCP-C was dispersed as the island phase was obtained.

Then, this pellet was formed into a 0.2 mm-thick, 40 mm-wide and 40-mm long film at a resin temperature of 300°C and a mold temperature of 130°C by using a molding machine. The dispersion stability, particle diameter Dr and film processability of the obtained film and the particle diameter Dr in the film are shown in Table 5.

<Comparative Example 5> resin composition and film (production of PEEK-C)

PEEK-C was prepared by the following method. That is, 8 parts by mass of 4,4-difluorobenzophenone, 4 parts by mass of hydroquinone, 60 parts by mass of sulfolane and 5.3 parts by mass of potassium carbonate were fed to an autoclave and stirred at 300°C for 4 hours. After heating was stopped to cool the reaction product, 220 parts by mass of ion exchange water was added to wash the product with hot water. Thereafter, the product was cooled and filtered with a 100-mesh filter and then, the residue was washed with 130°C hot water twice. The residue was further filtered and dried under reduced pressure to obtain PEEK-C. The molecular weight in terms of weight average molecular weight of the obtained PEEK-C was 200,000. Measurement method of molecular weight: GPC measurement was carried out by using GPC of Showa Denko K.K. and chlorophenol and dichlorobenzene as eluates. Polystyrene was used as a reference material to obtain the molecular weight.

A resin composition and a film were obtained in the same manner as in Example 13 except that PEEK-C prepared by the above method was used in place of PEEK-1. The pellet in which PEEK-C formed the sea phase and LCP-C was dispersed as the island phase was obtained. The dispersion stability, particle diameter Dr and film processability of the obtained film and the particle diameter Dr in the film are shown in Table 5.

[Table 5]

| Example | Example 13 | Comparative Example 5 |
|---|---|---|
| Composition | PEEK-1/LCP-C | PEEK-C/LCP-C |
| Ratio of composition | 8/2 | 8/2 |
| dispersion stability | 2 | 0 |
| Particle diameter Dr (μm) | 13 | 68 |
| film processability | 2 | 0 |
| particle diameter Dr (μm) in the film | 16 | 103 |

[Examples 14 to 17, Comparative Examples 6 to 8] polymer (VI)

<Example 14> production of polystyrene copolymer (preparation of polymer (v)

ps-1 having a methyl group in the side chain was prepared by the following method. That is, 0.15 part by mass of polyvinyl alcohol having a saponification degree of 80 % was dissolved in 70 parts by mass of ion exchange water at room temperature under an anaerobic condition. 15.62 parts by mass of styrene, 17.73 parts by mass of methyl styrene and 0.05 part by mass of azobisisobutyronitrile as a polymerization initiator were added to the obtained solution, heated at 60°C and stirred for 6 hours under an anaerobic condition to carry out polymerization. The obtained dispersion solution was reprecipitated with 400 parts by mass of methanol to obtain a polystyrene copolymer (ps-1) having units represented by the following formulas (st1) and (st2) .

[CF 46]

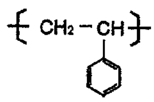

(st1)

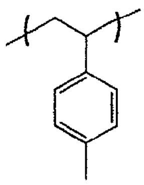

(st2)

The molar ratio (st1)/(st2) of the obtained ps-1 was 56/44. The molecular weight in terms of weight average molecular weight of ps-1 was 120,000. Measurement method of molecular weight: GPC measurement was carried out by using GPC of Showa Denko K.K. and chloroform as an eluate. Polystyrene was used as a reference material to obtain the molecular weight. The copolymerization ratio was calculated by carrying out 1H-NMR measurement with the DSX300WB NMR device of Bruker using chloroform as a solvent.

(melt kneading)

The obtained ps-1 and citric acid were dry blended together in a weight ratio of 20/1, supplied from a resin feeder and melt kneaded together at a resin temperature of 300°C by using the TEM26-SS twin-screw extruder (of Toshiba Machine Co, Ltd.) to obtain PS-1 having structures represented by the following formulas as a pellet.

[CF 47]

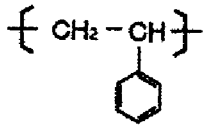

(ST1)

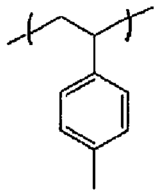

(ST2)

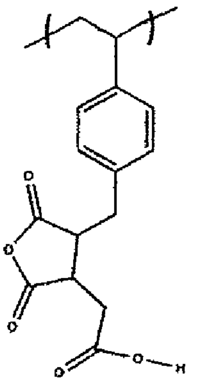

(ST3)

The molar ratio (ST1)/(ST2)/(ST3) of the obtained PS-1 was 56/12/32. The molecular weight in terms of weight average molecular weight of PS-1 was 130,000. Measurement method of molecular weight: GPC measurement was carried out by using GPC of Showa Denko K.K. and chloroform as an eluate. Polystyrene was used as a reference material to obtain the molecular weight.

The copolymerization ratio was calculated by carrying out 1H-NMR measurement with the DSX300WB NMR device of Bruker using chloroform as a solvent.

<Example 15> resin composition and film

LCP resin (commercially available product, LCP-C) and PS-1 were dry blended together in a ratio shown in Table 6 by using the TEM26-SS twin-screw extruder (of Toshiba Machine Co., Ltd.), supplied from a resin feeder, added in a ratio shown in Table 1 by using a weighing side feeder and melt kneaded together at a resin temperature of 300°C to obtain a pellet. The pellet in which PS-1 formed the sea phase and LCP-C was dispersed as the island phase was obtained.

Then, this pellet was formed into a 0.2 mm-thick, 40 mm-wide and 40 mm-long film at a resin temperature of 300°C and a mold temperature of 130°C by using a molding machine. The dispersion stability, particle diameter Dr and film processability of the obtained film and the particle diameter Dr in the film are shown in Table 6.

<Examples 16 to 17> resin compositions and films

Resin compositions and films were produced in the same manner as in Example 15 except that polyamide resin (commercially available product, PA6) or polyamide resin (commercially available product, PA12) was used in place of LCP resin (commercially available product, LCP-C). Pellets in which the polyamide resin formed the sea phase and PS-1 was dispersed as the island phase were obtained. The dispersion stability, particle diameter Dr and film

processability of each of the obtained films and the particle diameter Dr in the film are shown in Table 6.

[Table 6]

| Example | Example 15 | Example 16 | Example 17 |
|---|---|---|---|
| Composition | PS-1/LCP-C | PA6/PS-1 | PA12/PS-1 |
| Ratio of composition | 8/2 | 8/2 | 8/2 |
| dispersion stability | 2 | 2 | 2 |
| Particle diameter Dr (μm) | 23 | 5.7 | 4.1 |
| film processability | 2 | 2 | 2 |
| particle diameter Dr (μm) in the film | 26 | 7.0 | 4.7 |

<Comparative Examples 6 to 8> resin compositions and films

(production of polystyrene)

PS-C having no methyl group in the side chain was prepared by the following method. That is, 0.15 part by mass of polyvinyl alcohol having a saponification degree of 80 % was dissolved in 70 parts by mass of ion exchange water at room temperature under an anaerobic condition. 33 parts by mass of styrene and 0.05 part by mass of azobisisobutyronitrile as a polymerization initiator were added to the obtained solution, heated at 60°C and stirred for 6 hours under an anaerobic condition to carry out polymerization. The obtained dispersion solution was reprecipitated with 400 parts by mass of methanol to obtain polystyrene.

The molecular weight in terms of weight average molecular weight of the obtained polystyrene was 180,000.

Measurement method of molecular weight: GPC measurement was carried out by using GPC of Showa Denko K.K. and chloroform as an eluate. Polystyrene was used as a reference material to obtain the molecular weight.

Resin compositions and films were produced in the same manner as in Example 15 except that polystyrene resin (PS-C) prepared by the above method was used in place of PS-1. In Comparative Example 6, PS-C formed the sea phase and LCP-C was dispersed as the island phase.

In Comparative Examples 7 and 8, polyamide resin formed the sea phase and PS-C was dispersed as the island phase. The dispersion stability, particle diameter Dr and film processability of each of the obtained films and the particle diameter Dr in the film are shown in Table 7.

[Table 7]

| Comparative Example | C.Ex. 6 | C.Ex. 7 | C.Ex. 8 |
|---|---|---|---|
| Composition | PS-C/LCP-C | PA6/PS-C | PA12/PS-C |
| Ratio of composition | 8/2 | 8/2 | 8/2 |
| dispersion stability | 0 | 0 | 0 |
| Particle diameter Dr (μm) | 35 | 17 | 25 |
| film processability | 0 | 0 | 0 |
| particle diameter Dr (μm) in the film | 79 | 75 | 83 |
| C.Ex.: Comparative Example | | | |

INDUSTRIAL APPLICABILITY

The polymer of the present invention can be used as a compatibilizing agent for thermoplastic resins. The resin composition and molding of the present invention can be used in auto parts and electric and electronic material parts. They can also be used in the substrates of high-frequency circuits for mobile phones, the housings of 5G communication field base stations and flexible printed circuit boards.

## Claims

1. A polymer (B) essentially comprising units represented by the following formulas (1), (2) and (3), wherein the number of moles of the unit (1) is 0 to 95, the number of moles of the unit (2) is 0 to 50, and the number of moles of unit (3) is 2 to 80 when the total number of moles of the units (1), (2) and (3) is 100:

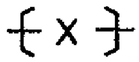

(1)

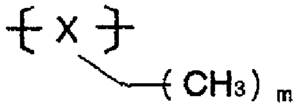

(2)

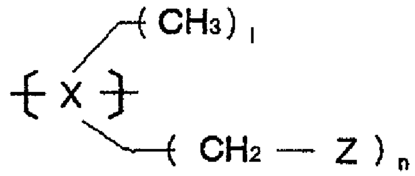

(3)

in the units (1) to (3), "X" is a recurring unit having a benzene ring, in the unit (2), $-CH_3$ is a methyl group substituted for the hydrogen atom of the benzene ring of "X", "m" is an integer of 1 to 6 indicative of the number of the methyl group, the unit (3) is a unit obtained by substituting the hydrogen atom of $-CH_3$ in the unit (2) by a substituent "Z" derived from a carboxylic acid or anhydride thereof, "n" is an integer of 1 to 6 indicative of the number of substitutions, l+n=m, and the unit (3) is a unit in which "n" is 1, 2, 3, 4, 5 or 6, or a unit of the combination thereof.

2. The polymer (B) according to claim 1, wherein, in the units (1) to (3), "X" is presented by following formulas;

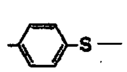
,
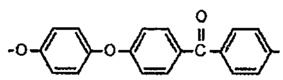
,

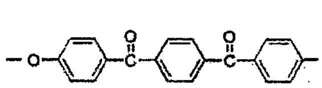
,
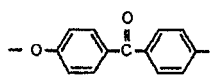

or

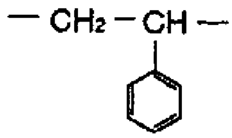

3. The polymer (B) according to claim 1, wherein "Z" in the formula (3) is a substituent derived from at least one compound selected from citric acid, maleic acid, itaconic acid and anhydrides thereof.

4. The polymer (B) according to claim 1, wherein the number of moles of the unit (1) is 10 to 95, the number of moles of the unit (2) is 0 to 35, and the number of moles of the unit (3) is 5 to 55.

5. The polymer (B) according to claim 1, wherein the formula (1) is a formula (S1), the formula (2) is a formula (S2), the formula (3) is a formula (S3) or (S4), the number of moles of the unit (S1) is 20 to 90, the number of moles of the unit (S2) is 0 to 30, and the number of moles of the unit (S3) or the unit (S4) is 10 to 50 based on 100 moles of

the total of unit (S1)+unit (S2)+(unit (S3) or unit (S4)).

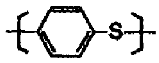
(S 1)、

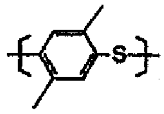
(S 2)

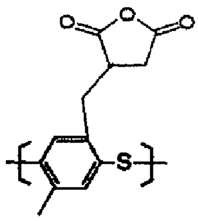
(S 3)

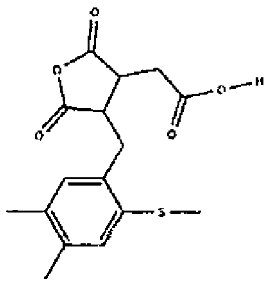
(S 4)

6. A resin composition comprising 100 parts by mass of a thermoplastic resin (component A) and 3 to 900 parts by mass of the polymer (B) (component B) of claim 1.

7. The resin composition according to claim 6, wherein the thermoplastic resin (component A) is at least one resin selected from the group consisting of polyester resin, liquid crystalline polyester resin and polyamide resin.

8. The resin composition according to claim 6 further comprising 100 to 500 parts by mass of another thermoplastic resin (component C) based on 100 parts by mass of the thermoplastic resin (component A).

9. The resin composition according to claim 8, wherein the other thermoplastic resin (component C) is at least one resin selected from the group consisting of polyphenylene sulfide (PPS), polyether ether ketone (PEEK), polyether ketone ketone (PEKK), polyether ketone (PEK) and polystyrene (PS).

10. The resin composition according to claim 6, wherein the thermoplastic resin (component A) is a liquid crystalline polyester resin, the polymer (component B) is a polymer (I) in which "X" in the units (1) to (3) is represented by the following formula, the component A forms an island phase, the component B forms a sea phase, and the particle diameter Dr of the island phase of a pellet obtained by melt kneading the resin composition is 5 μm to 50 μm.

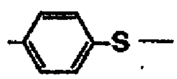

11. A molding composed of the resin composition of any one of claim 6 to 10.

12. The molding according to claim 11 composed of a resin composition comprising 100 parts by mass of a liquid crystalline polyester resin (component A) and 75 to 900 parts by mass of the polymer (component B), wherein the

polymer (the component (B)) is a polymer (I) in which "X" in the units (1) to (3) is represented by the following formula, the component A forms an island phase and the component B forms a sea phase, and the molding has (i) a relative dielectric constant of 2.0 to 4.0, (ii) a dielectric loss tangent of $1.0 \times 10^{-4}$ to $1.0 \times 10^{-2}$ and (iii) a particle diameter Dr of the island phase of 0.5 μm to 80 μm.

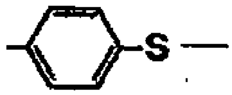

**13.** The molding according to claim 12, wherein the liquid crystalline polyester (component A) contains units represented by the following formula (a1) and (a2) in the main chain, and the molar ratio (a1)/(a2) is (5 to 8) / (5 to 2).

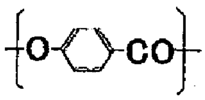

(a 1)

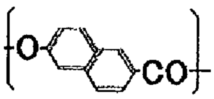

(a 2)

**14.** A method of producing the polymer (B) of claim 1, comprising steps of:

(α) preparing a polymer (b) essentially containing units represented by the following formulas (1) and (2):

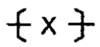

(1)

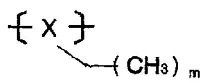

(2)

in the units (1) to (2), "X" is a recurring unit having a benzene ring, in the unit (2), $-CH_3$ is a methyl group substituted for the hydrogen atom of the benzene ring of "X", and "m" is an integer of 1 to 6 indicative of the number of substitutions;

the number of moles of the unit (1) being 0 to 98 and the number of moles of the unit (2) being 2 to 100 when the total number of moles of the units (1) and (2) is 100; and

(β) melt kneading the polymer (b) with at least one compound selected from the group consisting of citric acid, maleic acid, itaconic acid and anhydrides thereof.

**15.** The production method according to claim 14, wherein 0.05 to 20 parts by mass of at least one compound selected from the group consisting of citric acid, maleic acid, itaconic acid and anhydrides thereof is melt kneaded with 100 parts by mass of the polymer (b) in the step (β).

## INTERNATIONAL SEARCH REPORT

International application No.
PCT/JP2021/013370

A. CLASSIFICATION OF SUBJECT MATTER
C08J 3/21(2006.01)i; C08L 67/00(2006.01)i; C08L 81/02(2006.01)i; C08J 5/00(2006.01)i
FI: C08L81/02; C08J3/21 CFD; C08L67/00; C08J5/00 CEZ
According to International Patent Classification (IPC) or to both national classification and IPC

B. FIELDS SEARCHED
Minimum documentation searched (classification system followed by classification symbols)
C08J3/21; C08L67/00; C08L81/02; C08J5/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2-169667 A (TORAY INDUSTRIES, INC.) 29 June 1990 (1990-06-29) claims, page 5, lower left column, line 16 to lower right column, line 18, reference example 1, page 6, upper left column, line 17 to upper right column, line 12, reference example 3, page 6, lower left column, line 6 to lower right column, line 1, example 1 | 1-7, 11, 14-15 |
| Y | claims, page 5, lower left column, line 16 to lower right column, line 18, reference example 1, page 6, upper left column, line 17 to upper right column, line 12, reference example 3, page 6, lower left column, line 6 to lower right column, line 1, example 1 | 6-13 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 June 2021 (10.06.2021) | 22 June 2021 (22.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/013370

C (Continuation). DOCUMENTS CONSIDERED TO BE RELEVANT

| Category* | Citation of document, with indication, where appropriate, of the relevant passages | Relevant to claim No. |
|---|---|---|
| X | JP 2-214774 A (TORAY INDUSTRIES, INC.) 27 August 1990 (1990-08-27) claims, page 7, lower left column, line 1 to lower right column, line 2, reference example 1, page 8, upper left column, lines 3-17, reference example 3, page 8, lower right column, page 9 to page 9, upper left column, line 2, example 1 | 1-6, 11, 14-15 |
| Y | claims, page 7, lower left column, line 1 to lower right column, line 2, reference example 1, page 8, upper left column, lines 3-17, reference example 3, page 8, lower right column, page 9 to page 9, upper left column, line 2, example 1 | 6-13 |
| Y | JP 8-170024 A (POLYPLASTICS CO., LTD.) 02 July 1996 (1996-07-02) claims 1, 8, paragraph [0031], example 3 | 6-13 |

Form PCT/ISA/210 (continuation of second sheet) (January 2015)

**INTERNATIONAL SEARCH REPORT**
Information on patent family members

International application no.
PCT/JP2021/013370

| Patent Documents referred in the Report | Publication Date | Patent Family | Publication Date |
|---|---|---|---|
| JP 2-169667 A | 29 Jun. 1990 | (Family: none) | |
| JP 2-214774 A | 27 Aug. 1990 | (Family: none) | |
| JP 8-170024 A | 02 Jul. 1996 | US 6010760 A<br>claims 1, 8, column 19, lines 17-43, example 3<br>EP 790280 A1<br>claims 1, 8, page 13, line 54 to page 14, line 12, example 3<br>CN 1161052 A<br>claims 1, 8, page 19, lines 5-18, example 3 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008045087 A
- JP 2007246845 A